(19) **Europäisches Patentamt / European Patent Office / Office européen des brevets**

(11) **EP 4 343 882 B1**

(12) # EUROPEAN PATENT SPECIFICATION

(45) Date of publication and mention
of the grant of the patent:
**18.06.2025 Bulletin 2025/25**

(21) Application number: **23199309.8**

(22) Date of filing: **25.09.2023**

(51) International Patent Classification (IPC):
*H01M 4/134* (2010.01)   *H01M 4/38* (2006.01)
*H01M 4/40* (2006.01)   *H01M 4/62* (2006.01)
*H01M 10/0525* (2010.01)   *H01M 10/0562* (2010.01)
*H01M 10/0585* (2010.01)   *H01M 10/42* (2006.01)
*H01M 4/02* (2006.01)

(52) Cooperative Patent Classification (CPC):
**H01M 10/0562; H01M 4/134; H01M 4/382;
H01M 4/405; H01M 4/625; H01M 10/0525;
H01M 10/0585; H01M 10/4235;** H01M 2004/027;
H01M 2300/0068; H01M 2300/0071;
H01M 2300/0091; Y02E 60/10

(54) **ANODE-SOLID ELECTROLYTE SUB-ASSEMBLY FOR SOLID-STATE SECONDARY BATTERY, SOLID-STATE SECONDARY BATTERY INCLUDING ANODE-SOLID ELECTROLYTE SUB-ASSEMBLY, AND METHOD OF PREPARING ANODE-SOLID ELECTROLYTE SUB-ASSEMBLY**

ANODEN-FESTELEKTROLYT-UNTERANORDNUNG FÜR FESTKÖRPERSEKUNDÄRBATTERIE, FESTKÖRPERSEKUNDÄRBATTERIE MIT ANODEN-FESTELEKTROLYT-UNTERANORDNUNG UND VERFAHREN ZUR HERSTELLUNG EINER ANODEN-FESTELEKTROLYT-UNTERANORDNUNG

SOUS-ENSEMBLE ANODE-ÉLECTROLYTE SOLIDE POUR BATTERIE SECONDAIRE À SEMI-CONDUCTEURS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **26.09.2022 KR 20220121965
18.09.2023 KR 20230124255**

(43) Date of publication of application:
**27.03.2024 Bulletin 2024/13**

(73) Proprietor: **Samsung Electronics Co., Ltd.
Suwon-si, Gyeonggi-do 16677 (KR)**

(72) Inventors:
• **HEO, Jinsuck
16678 Suwon-si (KR)**

• **KIM, Jusik
16678 Suwon-si (KR)**
• **YOON, Gabin
16678 Suwon-si (KR)**
• **CHANG, Wonseok
16678 Suwon-si (KR)**

(74) Representative: **Elkington and Fife LLP
Prospect House
8 Pembroke Road
Sevenoaks, Kent TN13 1XR (GB)**

(56) References cited:
JP-A- 2021 089 859     US-A1- 2020 303 779
US-A1- 2021 399 336

**Description**

FIELD OF THE INVENTION

The disclosure relates to an anode-solid electrolyte sub-assembly for a solid-state secondary battery, a solid-state secondary battery including the same, and a method of preparing the same.

BACKGROUND OF THE INVENTION

In line with recent requirements in industry, batteries with high energy density and stability are actively being developed. For example, lithium-ion batteries are commercialized not only in the fields related to information-related devices and communication devices, but also in the automobile industry. In the automobile industry, safety is greatly emphasized as it affects human lives.

Currently commercially available lithium-ion batteries utilize liquid electrolytes containing a flammable organic solvent, and thus, in the event of a short-circuit, may undergo overheating and cause fire. In this context, a solid-state secondary battery using a solid electrolyte is proposed.

By not using flammable organic solvents, a solid-state secondary battery may significantly decrease the risk of fire or explosion even in the event of a short-circuit. Therefore, such solid-state secondary batteries may be significantly safer than lithium-ion batteries using liquid electrolytes.

To increase energy density of such solid-state secondary batteries, lithium may be used as an anode active material. For example, lithium metal is known to have a capacity density (capacity per unit mass) that is 10 times that of graphite generally used as anode active material. Accordingly, by using lithium as an anode active material, it is possible to produce a solid-state secondary battery having increased capacity with a smaller thickness.

To increase the energy density of a solid-state secondary battery, an anodeless solid-state battery is also proposed. However, in an anodeless solid-state battery, it is still difficult to increase the energy density to a desired level, and improvements are needed in terms of insufficient lifetime and high-rate characteristics. Examples of anodeless solid-state batteries are given in documents JP 2021 089859 A, US 2020/303779 A1 and US 2021/399336 A1.

SUMMARY OF THE INVENTION

Provided is an anode-solid electrolyte sub-assembly for a solid-state secondary battery, which can provide a zero-stress anode that inhibits a thickness change and shows no volume change during charging/discharging.

Provided are a solid-state secondary battery having improved cell performance by including the above-described anode-solid electrolyte sub-assembly, and a method of preparing the same.

Additional aspects will be set forth in part in the description which follows and, in part, will be apparent from the description, or may be learned by practice of the presented embodiments of the disclosure.

According to an aspect of the disclosure, an anode-solid electrolyte sub-assembly for a solid-state secondary battery includes an anode current collector, a solid electrolyte having a first portion with a plurality of uptake rooms providing space for storing lithium, and a second portion without uptake rooms; an interlayer disposed between the anode current collector and the first portion of the solid electrolyte and facing an opening of the uptake rooms; and an insulation layer disposed between the anode current collector and the second portion of the solid electrolyte.

The interlayer may contain an interlayer forming material having an ionic conductivity of about $10^{-8}$ siemens per centimeter (S/cm) or greater, for example, about $10^{-8}$ siemens per centimeter (S/cm) to about $10^{8}$ S/cm and an electronic conductivity of about $4.0 \times 10^{-9}$ S/cm or greater, for example, about $4.0 \times 10^{-9}$ S/cm to about $10^{8}$ S/cm.

An uptake room of the plurality of uptake rooms may be an empty space recessed at an angle from one side of the solid electrolyte, and the empty space may have a plate shape or a hole shape.

The plurality of uptake rooms may contain a first metal material, and the first metal material may be lithium, a lithium-a first metal alloy, or a combination.

The interlayer may include: lithium; a carbonaceous compound; a mixture of a carbonaceous compound and a second metal, a metalloid, or a combination thereof; a composite of a carbonaceous compound and a second metal, a metalloid, or a combination thereof; or a combination thereof.

The uptake room may comprise lithium. The lithium may be deposited in a direction from the interlayer to the solid electrolyte as lithium ions migrate from a cathode when charging.

The interlayer may include i) a composite of a first particle composed of amorphous carbon and a second particle composed of a second metal or a metalloid; or ii) a mixture of a first particle composed of amorphous carbon and a second particle composed of a second metal or a metalloid, wherein the amount of the second particle may be about 1 wt% to 60 wt% relative to the total weight of the composite or the mixture.

The second metal may have a size of about 0.1 nanometers (nm) to about 300 nm, and the interlayer may have a thickness of 10 microns ($\mu$m) or less.

The insulation layer may have a thickness equal to or less than a thickness of the interlayer, and the insulation layer may have a thickness of about 0.001 $\mu$m to about 10 $\mu$m.

The volume of the uptake room may be determined by multiplying an area of the uptake room by a thickness of a lithium deposition layer.

Von Mises stress at the interface between the anode and solid electrolyte may be 0 when charging and discharging.

According to another aspect, a solid-state secondary battery includes a cathode and the above-described anode-solid electrolyte sub-assembly disposed on the cathode, wherein the solid-state electrolyte may be disposed between the cathode and the anode current collector.

The solid-state electrolyte may include an oxide solid electrolyte (also referred to as an "oxide-based solid electrolyte"), a sulfide solid electrolyte (also referred to as a "sulfide-based solid electrolyte"), or a combination thereof.

The oxide-based solid-state electrolyte may be $Li_{1+x+y}Al_xTi_{2-x}Si_yP_{3-y}O_{12}$ ($0<x<2$ and $0\leq y<3$), $Li_3PO_4$, $Li_xTi_y(PO_4)_3$ ($0<x<2$ and $0<y<3$), $Li_xAl_yTi_z(PO_4)_3$ ($0<x<2$, $0<y<1$, and $0<z<3$), $Li_{1+x+y}(Al, Ga)_x(Ti, Ge)_{2-x}Si_yP_{3-y}O_{12}$ ($0\leq x\leq 1$ and $0\leq y\leq 1$), $Li_xLa_yTiO_3$ ($0<x<2$ and $0<y<3$), $Li_2O$, $LiOH$, $Li_2CO_3$, $LiAlO_2$, $Li_2O\text{-}Al_2O_3\text{-}SiO_2\text{-}P_2O_5\text{-}TiO_2\text{-}GeO_2$, $Li_{3+x}La_3M_2O_{12}$ (M = Te, Nb, or Zr, and x is an integer of 1 to 10), or a combination thereof.

The oxide-based solid electrolyte may be a garnet-type solid electrolyte, and the garnet-type solid electrolyte may include an oxide represented by Formula 2.

Formula 2 $(Li_xM1_y)(La_{a1}M2_{a2})_{3-\delta}(Zr_{b1}M3_{b2})_{2-\omega}O_{12-z}X_z$

In Formula 2, M1 may be hydrogen (H), iron (Fe), gallium (Ga), aluminum (Al), boron (B), beryllium (Be) or a combination thereof,

M2 may be barium (Ba), calcium (Ca), strontium (Sr), yttrium (Y), bismuth (Bi), praseodymium (Pr), neodymium (Nd), actinium (Ac), samarium (Sm), gadolinium (Gd) or a combination thereof;
M3 may be hafnium (Hf), tin (Sn), niobium (Nb), titanium (Ti), vanadium (V), chromium (Cr), manganese (Mn), cobalt (Co), nickel (Ni) ), copper (Cu), molybdenum (Mo), tungsten (W), tantalum (Ta), magnesium (Mg), technetium (Tc), ruthenium (Ru), palladium (Pd), iridium (Ir), scandium (Sc ), cadmium (Cd), indium (In), antimony (Sb), tellurium (Te), thallium (Tl), platinum (Pt), silicon (Si), aluminum (Al) or combinations thereof,

$$6\leq x\leq 8,\ 0\leq y<2,\ -0.2\leq\delta\leq 0.2,\ -0.2\leq\omega\leq 0.2,\ 0\leq z\leq 2,$$

$$a1+a2=1,\ 0<a1\leq 1,\ 0\leq a2<1,$$

$$b1+b2=1,\ 0<b1<1,\ and\ 0\leq b2<1,$$

wherein X may be a monovalent anion, a bivalent anion, a trivalent anion, or a combination thereof.

The oxide-based solid electrolyte may be an oxide represented by Formula 3 below.

Formula 3 $Li_{3+x}La_3Zr_{2-a}M_aO_{12}$

In Formula 3, M may be Al, Ga, In, Si, Ge, Sn, Sb, Bi, Sc, Y, Ti, Hf, V, Nb, Ta, W, or combinations thereof, wherein x may be a number of 1 to 10, and $0\leq a<2$.

The anode current collector, interlayer, uptake room, or/and areas therebetween may be lithium (Li) metal-free areas, which do not contain Li metal during the initial or discharged state of the solid-state secondary battery.

According to another aspect, a method of preparing a solid-state secondary battery includes forming an insulation layer on a first side of a solid electrolyte; removing a portion of the insulation layer and a portion of the solid electrolyte to form a plurality of uptake rooms providing space for storing lithium within the solid electrolyte, each of the plurality of uptake rooms having an opening on the first side of the solid electrolyte; forming an interlayer on an anode current collector; and removing a portion of the interlayer on the anode current collector, to provide an anode current collector having an interlayer pattern formed thereon, disposing, on the solid electrolyte having the plurality of uptake rooms formed therein, the anode current collector having the interlayer pattern formed thereon in such a way that the interlayer faces the opening of the plurality of uptake rooms, and the insulation layer faces the anode current collector to form an anode-solid electrolyte sub-assembly; and disposing a cathode on a second side of the solid electrolyte of the anode-solid electrolyte sub-assembly, to thereby prepare the above-described solid-state secondary battery.

The process of providing a plurality of uptake rooms providing room for storing lithium inside the solid electrolyte may be conducted by laser drilling, stamping, etching, chemical milling, laser scribing, water-jet cutting, nano imprinting, or a combination thereof.

The interlayer may include an interlayer forming material having an ionic conductivity of about $10^{-8}$ S/cm or greater, for example, about $10^{-8}$ S/cm to about $10^8$ S/cm and an electronic conductivity of about $4.0 \times 10^{-9}$ S/cm or greater, for example, about $4.0 \times 10^{-9}$ S/cm to about $10^8$ S/cm.

The process of providing a first anode active material layer between the anode current collector and interlayer may be further included.

In the charging step, lithium is precipitated to form a first anode active material layer.

The first anode active material layer may be formed using a third metal prior to assembly.

The first anode active material layer may include a third metal. The third metal may include one or more selected from among silver (Ag), tin (Sn), indium (In), silicon (Si), gallium (Ga), aluminum (Al), Titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), cerium (Ce), lanthanum (La), tungsten (W), tellurium (Te), and a lithium alloy. In addition, the lithium alloy may include lithium in combination with silver (Ag), tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), cerium (Ce), lanthanum (La), tungsten (W), tellurium (Te), or a combination thereof.

The first anode active material layer may be further formed as a deposition layer during the charging process, or disposition process, or both of the aforementioned processes of the solid-state secondary battery, and the first anode active material layer may be lithium metal, a lithium alloy, or a combination thereof.

BRIEF DESCRIPTION OF THE DRAWINGS

The above and other aspects, features, and advantages of certain embodiments of the disclosure will be more apparent from the following description taken in conjunction with the accompanying drawings, in which:

FIG. 1 is a diagram illustrating a structure of a solid-state secondary battery including an embodiment of an anode-solid electrolyte sub-assembly;

FIG. 2 is a diagram illustrating a structure of a solid-state secondary battery including another embodiment of an anode-solid electrolyte sub-assembly;

FIG. 3 is a diagram illustrating the state of migration of lithium ions when a solid-state secondary battery in FIG. 1 is being charged;

FIG. 4 is a diagram illustrating the state of migration of lithium ions when a solid-state secondary battery in FIG. 2 is being discharged;

FIGS. 5A to 5D are diagrams illustrating an embodiment of a method of preparing a solid-state secondary battery in a single-cell form;

FIGS. 6A to 6C are diagrams illustrating an embodiment of a method of preparing a solid-state secondary battery in a bicell form;

FIG. 7A is a scanning electron microscope photograph showing a plate-shaped uptake room formed in a solid electrolyte in the anode-solid electrolyte sub-assembly prepared in Example 1;

FIG. 7B is a scanning electron microscope photograph showing a hole-shaped uptake room formed in a solid electrolyte in the anode-solid electrolyte sub-assembly prepared in Example 2;

FIG. 8 schematically shows a structure of a solid-state battery prepared according to Example 1;

FIGS. 9A and 9B schematically show a structure of a simulated sample construct for evaluating the Von Mises stress at the interface between the interlayer and the solid electrolyte in Evaluation Example 2;

FIG. 9C and FIG. 9D are each a graph of voltage (Volts, V) versus time (hours, h) showing charging and discharging profiles of the construct in FIG. 9A and FIG. 9B, respectively; and

FIG. 10 is a graph of areal capacity of lithium (milliampere hour per square centimeter, mAh cm$^{-2}$) versus lithium metal thickness (microns, $\mu$m) showing the relationship between a thickness of lithium metal and an areal capacity of lithium.

DETAILED DESCRIPTION OF THE EMBODIMENTS

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects. As used herein, the term "and/or"

**EP 4 343 882 B1**

includes any and all combinations of one or more of the associated listed items. Expressions such as "at least one of," when preceding a list of elements, modify the entire list of elements and do not modify the individual elements of the list.

It will be understood that when an element is referred to as being "on" another element, it can be directly on the other element or intervening elements may be present therebetween. In contrast, when an element is referred to as being "directly on" another element, there are no intervening elements present.

It will be understood that, although the terms "first," "second," "third," etc. may be used herein to describe various elements, components, regions, layers, and/or sections, these elements, components, regions, layers, and/or sections should not be limited by these terms. These terms are only used to distinguish one element, component, region, layer, or section from another element, component, region, layer, or section. Thus, "a first element," "component," "region," "layer," or "section" discussed below could be termed a second element, component, region, layer, or section without departing from the teachings herein.

The terminology used herein is for the purpose of describing particular embodiments only and is not intended to be limiting. As used herein, "a", "an," "the," and "at least one" do not denote a limitation of quantity, and are intended to include both the singular and plural, unless the context clearly indicates otherwise. For example, "an element" has the same meaning as "at least one element," unless the context clearly indicates otherwise. "At least one" is not to be construed as limiting "a" or "an." "Or" means "and/or." As used herein, the term "and/or" includes any and all combinations of one or more of the associated listed items. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Furthermore, relative terms, such as "lower" or "bottom" and "upper" or "top," may be used herein to describe one element's relationship to another element as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The exemplary term "lower," can therefore, encompasses both an orientation of "lower" and "upper," depending on the particular orientation of the figure. Similarly, if the device in one of the figures is turned over, elements described as "below" or "beneath" other elements would then be oriented "above" the other elements. The exemplary terms "below" or "beneath" can, therefore, encompass both an orientation of above and below.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within $\pm$ 30%, 20%, 10% or 5% of the stated value.

An expression that "metal" as used herein includes metal, semi-metal, and a combination thereof.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Exemplary embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

Hereinafter, an anode-solid electrolyte sub-assembly for a solid-state secondary battery according to an embodiment, a solid-state secondary battery including the same, and a method of preparing the same, will be described in greater detail with reference to the accompanied drawings. In the drawings, like reference numerals may refer to like elements, and the thicknesses or sizes of each element may be exaggerated for convenience of description. Further, Examples described below are provided for illustrative purposes only, and various modifications may be possible from these Examples.

An anodeless solid-state secondary battery can have improved electrical characteristics by adopting a layer containing a carbonaceous active material and a metal between the solid electrolyte and anode current collector, thereby inducing a uniform current density and forming a uniform lithium deposition. However, in such an anodeless solid-state secondary battery, a thickness change occurs proportionally to the amount of lithium deposited between the anode current collector and electrolyte, thus causing changes in volume, etc. in a cell or the entire battery. As this necessitates the use of a buffer or a method to accommodate such changes in thickness and volume, the energy density of a solid-state secondary battery may deteriorate, and therefore, improvements are needed in this regard.

To address the aforementioned issues, the present inventors have discovered an anode-solid electrolyte sub-assembly, which includes a stress-free anode that inhibits a thickness change upon charging/discharging while having excellent high-rate characteristics. The present inventors have also discovered a solid-state secondary battery including the anode-solid electrolyte sub-assembly.

An anode-solid electrolyte sub-assembly according to an embodiment may include an anode current collector; an insulation layer and an interlayer disposed on one side of the anode current collector; and a solid electrolyte disposed on the interlayer and positioned opposite to the anode current collector, and including a plurality of uptake rooms providing space for lithium.

The interlayer may be positioned between the uptake rooms and the anode current collectors opposite thereto, and the interlayer can face an opening of the uptake rooms.

The insulation layer may inhibit lithium from being deposited between the anode current collector and areas other than the uptake rooms in the solid electrolyte.

In an anode-solid electrolyte sub-assembly according to an embodiment, uptake rooms having a size accommodating the amount of lithium deposition corresponding to the capacity of cathode may be formed inside the solid electrolyte, and an interlayer may be formed on the anode current collector facing an opening of and in contact with the uptake rooms, so as to provide a structure which allows rapid lithium migration via the solid electrolyte and reduces lithium deposition between the interlayer and the anode current collector, thereby minimizing Von Mises stress transferred to the battery.

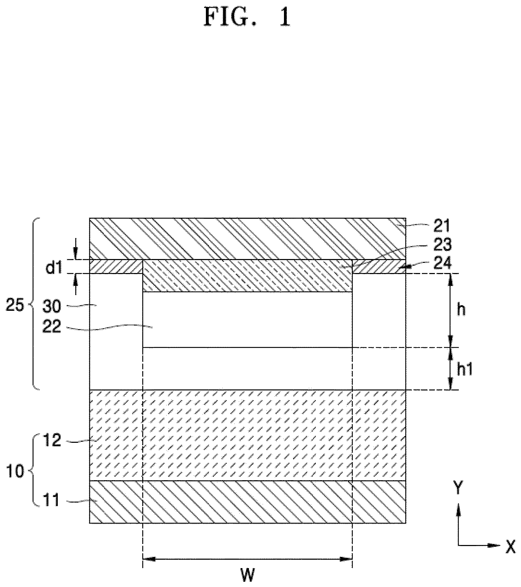

FIG. 1 schematically shows a structure of an anode-solid electrolyte sub-assembly 25 for a solid-state secondary battery according to an example.

An interlayer 23 and an insulation layer 24 may be positioned on one side of an anode current collector 21 and a plurality of empty spaces may be formed inside a solid electrolyte 30, wherein these empty spaces represent a plurality of uptake rooms 22 providing space for storing lithium. Such uptake rooms are in contact with and open to the interlayer 23 such that they can accommodate lithium deposited from migrated lithium ions. However, porous regions that may be found in a solid electrolyte, due to their discontinuously pores, cannot provide lithium ion paths and thus cannot accommodate lithium deposition.

For example, an empty space formed inside the solid electrolyte 30 (an uptake room) may be a groove.

The interlayer 23, as illustrated in FIG. 1, may be disposed between the uptake room 22 and the anode current collector 21. In addition, the insulation layer 24 may be formed between the anode current collector 21 and the solid electrolyte in the portion that does not have any uptake rooms. As illustrated in FIG. 1, the insulation layer 24 may include an insulation layer material that inhibits lithium from being deposited between the anode current collector and the areas other than the uptake rooms in the solid electrolyte such that lithium is deposited into an uptake room..

The interlayer 23 may contain an interlayer forming material having an ionic conductivity of about $10^{-8}$ S/cm or more, and an electronic conductivity of about $4.0 \times 10^{-9}$ S/cm or more.

As used herein, the "interlayer forming material" provides both ionic conductivity and electronic conductivity at the same time.

For example, the interlayer forming material may have an electronic conductivity at 25 °C of about $4.0 \times 10^{-9}$ S/cm or more, about $1.0 \times 10^{-8}$ S/cm or more, about $4.0 \times 10^{-8}$ S/cm or more, about $1.0 \times 10^{-7}$ S/cm or more, about $4.0 \times 10^{-7}$ S/cm or more, about $1.0 \times 10^{-6}$ S/cm or more, or about $1.0 \times 10^{-5}$ S/cm or more. The maximum electronic conductivity is not particularly limited and can be about $10^8$ S/cm. The electronic conductivity can be determined according to ASTM B-193, "Standard Test Method for Resistivity of Electrical Conductor Materials," e.g., at 20°C, or according to ASTM E-1004, "Standard Test Method for Determining Electronic conductivity Using the Electromagnetic (Eddy-Current) Method," e.g., at 20°C. Additional details may be determined by one of skill in the art without undue experimentation. As the interlayer forming material has such a high electronic conductivity, a solid-state secondary battery that includes the interlayer forming material may have reduced internal resistance.

For example, the ionic conductivity of the interlayer forming material may be about $1.0 \times 10^{-8}$ S/cm or more, about $1.0 \times 10^{-6}$ S/cm or more, about $5.0 \times 10^{-6}$ S/cm or more, about $1.0 \times 10^{-5}$ S/cm or more, or about $5.0 \times 10^{-5}$ S/cm or more. The maximum ionic conductivity is not particularly limited and can be about $10^8$ S/cm. Ionic conductivity may be determined by a complex impedance method at 20°C, further details of which can be found in J.-M. Winand et al., "Measurement of Ionic Conductivity in Solid Electrolytes," Europhysics Letters, vol. 8, no. 5, p. 447-452, 1989. As the interlayer forming material has such a high ionic conductivity, a solid-state secondary battery that includes the interlayer forming material may have reduced internal resistance.

A binder may be added to the interlayer.

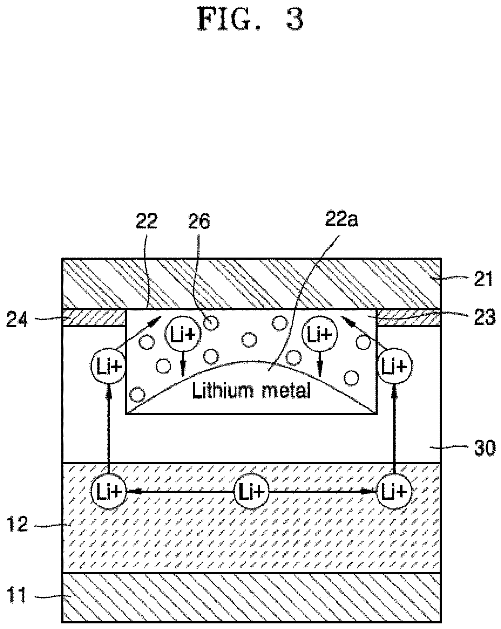

As shown in FIG. 3, in the solid-state secondary battery in FIG. 1, the uptake room 22 capable of receiving lithium deposition upon charging may be an empty space recessed at the right angle, or at an angle other than the right angle, from one side of the solid electrolyte. The empty space may have, for example, a plate type or a hole type shape. The hole may have, for example, a cylindrical hole type shape. Reference numeral 22a in FIG. 3 represents an empty space in the uptake room.

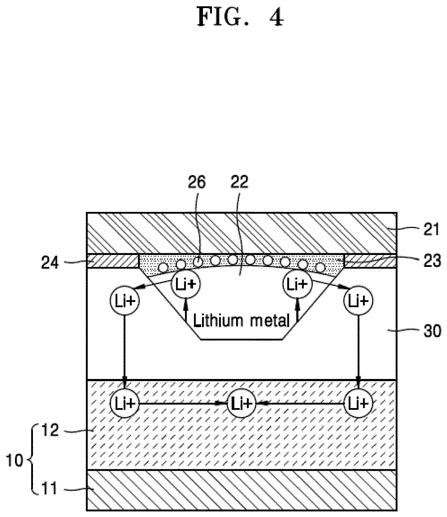

The interlayer 23 between the anode current collector 21 and the uptake room 22 may facilitate lithium deposition such that lithium deposition takes place from an area near the solid electrolyte 30 and fills up to the center of the uptake room 22. The deposited lithium may be present as a Li-alloy 26 formed from Li and an interlayer forming material, and upon discharging, the deposited lithium may move onto the anode current collector 21 above the uptake room 22, and as a result, a small amount of the interlayer material may be present as Li-alloys or with Li-alloys, thus terminating the discharging (FIG. 4).

FIG. 3 shows deposition of lithium in the uptake room upon charging.

According to another embodiment, lithium being deposited upon charging may be provided into an empty space within the solid electrolyte (uptake rooms). In addition, lithium may be deposited between the anode current collector and the interlayer. If lithium is deposited in such a manner, thickness changes in the battery may be minimized.

The interlayer 23 may face an opening of the uptake room 22, and by using a material with ionic conductivity and electric conductivity as the interlayer forming material, a stress due to lithium deposition may be controlled.

For example, the interlayer may contain a carbonaceous compound, a second metal, a metalloid, or a combination thereof. For example, the interlayer may contain lithium.

The carbonaceous compound as used herein includes an amorphous carbon, and the second metal may include indium (In), silicon (Si), gallium (Ga), tin (Sn), aluminum (Al), Titanium (Ti), zirconium (Zr), niobium (Nb), germanium (Ge), antimony (Sb), bismuth (Bi), gold (Au), platinum (Pt), palladium (Pd), magnesium (Mg), silver (Ag), zinc (Zn), nickel, iron, cobalt, chromium, cesium, cerium, sodium, potassium, calcium, yttrium, bismuth, tantalum, hafnium, barium, vanadium, strontium, lanthanum, or a combination thereof.

Examples of the amorphous carbon may include carbon black (CB), acetylene black (AB), furnace black (FB), Ketjen black (KB), graphene, carbon nanotubes, carbon nanofibers, and the like, but are not necessarily limited thereto. The amorphous carbon may be any material classified as amorphous carbon in the art.

The interlayer may include i) a composite of a first particle composed of amorphous carbon and a second particle composed of a second metal or metalloid, or ii) a mixture of a first particle composed of amorphous carbon and a second particle composed of a second metal or a metalloid. Here, in the composite of the first and second particles, as well as in the mixture of the first and second particles, a mixing weight ratio of the first particle and the second particle may be, for example, about 10:1 to about 1:2, about 5:1 to about 1:1, or about 4:1 to about 2:1.

The mixture may be the product of simply mixing the first and second particles, or a mixture product of the first and second particles physically bound by using a binder.

The amount of the second particle may be about 1 wt% to about 60 wt% with respect to the total weight of the composite or the mixture. In particular, the amount of the second particle may be about 8 wt% to about 60 wt%, about 10 wt% to about 50 wt%, about 15 wt% to about 40 wt%, or about 20 wt% to about 30 wt%, with respect to the total weight of the composite or the mixture. By including the second particle in an amount in the above ranges, the solid-state secondary battery may have further improved cycle characteristics.

The interlayer may include: lithium; a carbonaceous compound; a mixture of i) a carbonaceous compound and ii) one or more selected from among a second metal and a metalloid; a composite of i) a carbonaceous compound and ii) one or more selected from a second metal and a metalloid; or a combination thereof.

The second metal may include one or more selected from among indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), palladium (Pd), magnesium (Mg), silver (Ag), and zinc (Zn). However, the metal is not necessarily limited to the aforementioned materials and may be any suitable material available in the art as a metal anode active material capable of forming an alloy or a compound with lithium.

The interlayer may include an anode active material from among a carbonaceous compound, and a metal or metalloid anode active material, or may include a mixture of different anode active materials. For example, the interlayer may include amorphous carbon alone, or may include one or more metal or metalloid selected from among indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), palladium (Pd), magnesium (Mg), silver (Ag), and zinc (Zn). Alternatively, the interlayer may include a composite of amorphous carbon and at least one metal or metalloid selected from among indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), palladium (Pd), magnesium (Mg), silver (Ag), and zinc (Zn). A composition ratio, in weight, of the amorphous carbon and silver, etc. may be, without being limited to, about 10:1 to about 1:2, about 5:1 to about 1:1, or about 4:1 to about 2:1, and may be selected according to a required feature of a solid-state secondary battery. As the interlayer has such a composition, the solid-state secondary battery may have further improved cycle characteristics.

The anode active material included in the interlayer may include, for example, a mixture of a first particle composed of amorphous carbon, and a second particle composed of a metal or a metalloid. The mixture may be the product of simply mixing the first and second particles, or a mixture product of the first and second particles physically bound by using a binder. Examples of the metal or metalloid may include one or more selected from among indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), magnesium (Mg), palladium (Pd), silver (Ag), and zinc (Zn). In some cases, the metalloid may be a semiconductor. The amount of the second particle may be about 8 wt% to about 60 wt%, about 10 wt% to about 50 wt%, about 15 wt% to about 40 wt%, or about 20 wt% to about 30 wt%, relative to the total weight of the mixture. By including the second particle in an amount in the above ranges, a solid-state secondary battery may have further improved cycle characteristics.

The interlayer may include i) a composite of a first particle composed of amorphous carbon and a second particle composed of a metal or metalloid; or ii) a mixture of a first particle composed of amorphous carbon and a second particle composed of a metal or a metalloid, wherein the amount of the second particle may be about 1 wt% to 60 wt% relative to the total weight of the composite or the mixture.

For example, the interlayer may contain a mixture of a carbonaceous compound and silver (Ag), or may contain a composite of a carbonaceous compound and silver (Ag).

The interlayer may be a carbonaceous compound, graphite, gold, silver, nickel, platinum, molybdenum, tungsten, stainless steel, lithium-Ag, carbon-Ag, or a combination thereof.

The uptake room after charging may contain a first metal material, and the first metal material may be lithium, a first metal (M1), a lithium-first metal (M1) alloy, or a combination thereof. Here, the first metal material may have a size of about 0.1 nm to about 300 nm.

Examples of the first metal (M1) material may include a first metal (M1), a lithium-first metal (M1) alloy, or a combination thereof. The first metal (M1) may be a metal, and examples of this metal may include tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), cerium (Ce), silver (Ag), sodium (Na), potassium (K), calcium (Ca), yttrium (Y), bismuth (Bi), tantalum (Ta), hafnium (Hf), barium (Ba), vanadium (V), strontium (Sr), tellurium (Te), lanthanum (La), or a combination thereof.

The first metal material may be a Li-Ag alloy, a Li-Au alloy, a Li-Al alloy, a Li-Sn alloy, a Li-In alloy, a Li-Zn alloy, a Li-Ge alloy, a Li-Si alloy, a Li-Sb alloy, a Li-Bi alloy, a Li-Ga alloy, a Li-Na alloy, a Li-K alloy, a Li-Te alloy, a Li-Mg alloy, a Li-Mo alloy, a Li-Sn-Bi alloy, a Li-Sn-Ag alloy, a Li-Sn-Na alloy, a Li-Sn-K alloy, a Li-Sn-Ca alloy, a Li-Te-Ag alloy, a Li-Sb-Ag alloy, a Li-Sn-Sb alloy, a Li-Sn-V alloy, a Li-Sn-Ni alloy, a Li-Sn-Cu alloy, a Li-Sn-Zn alloy, a Li-Sn-Ga alloy, a Li-Sn-Ge alloy, a Li-Sn-Sr alloy, a Li-Sn-Y alloy, a Li-Sn-Ba alloy, a Li-Sn-Au alloy, a Li-Sn-La alloy, a Li-Al-Ga alloy, a Li-Mg-Sn alloy, a Li-Mg-Al alloy, a Li-Mg-Si alloy, a Li-Mg-Zn alloy, a Li-Mg-Ga alloy, a Li-Mg-Ag alloy, or a combination thereof.

The first metal material can be present in the interlayer, and the first metal material in the interlayer may have a size of about 0.1 nm to about 300 nm, about 0.1 nm to about 200 nm, or about 100 nm to about 300 nm. When the size of the first metal material is within the above ranges, interfacial resistance between the solid electrolyte and anode may decrease.

In the present application, the term "size" refers to a particle diameter if the particle to be measured is spherical, and for a particle that is non-spherical, said term refers to a major axis length of the particle. The particle diameter may be, for example, an average particle diameter, and the major axis length may be, for example, an average major axis length. The average particle diameter and average major axis length represent an average value of particle diameter and major axis length measurements, respectively.

The particle size may be evaluated using a scanning electron microscope, or a transmission electron microscope. For example, the average particle diameter may be an average particle diameter observed by scanning electron microscopy (SEM), and may be calculated as an average value of diameters of approximately 10-30 particles measured using SEM images.

The interlayer may have a thickness of 10 $\mu$m or less, about 0.5 $\mu$m to about 10 $\mu$m, about 1 $\mu$m to about 10 $\mu$m, or about 1 $\mu$m to about 9 $\mu$m. When the thickness of the interlayer is within the above ranges, it may effectively facilitate deposition of lithium in uptake rooms of the solid electrolyte and inhibit short-circuits in the solid-state secondary battery while improving cycle characteristics thereof.

A ratio of the thickness of an interlayer and the height of an uptake room may be for example, about 1:1 to about 1:5.

The thickness of the interlayer may be about 5 $\mu$m to about 10 $\mu$m, for example. The height of the uptake room may be about 15 $\mu$m to about 25 $\mu$m, for example.

The volume of an uptake room 22 may be determined by a cathode areal capacity. The volume of an uptake room may be determined by multiplying the area of the uptake room by the thickness of a lithium deposition layer.

According to an embodiment, if the cathode areal capacity is 3.2 mAh/cm$^2$, the height of the uptake room is 15 $\mu$m, and the diameter of the uptake room is 0.1 $\mu$m.

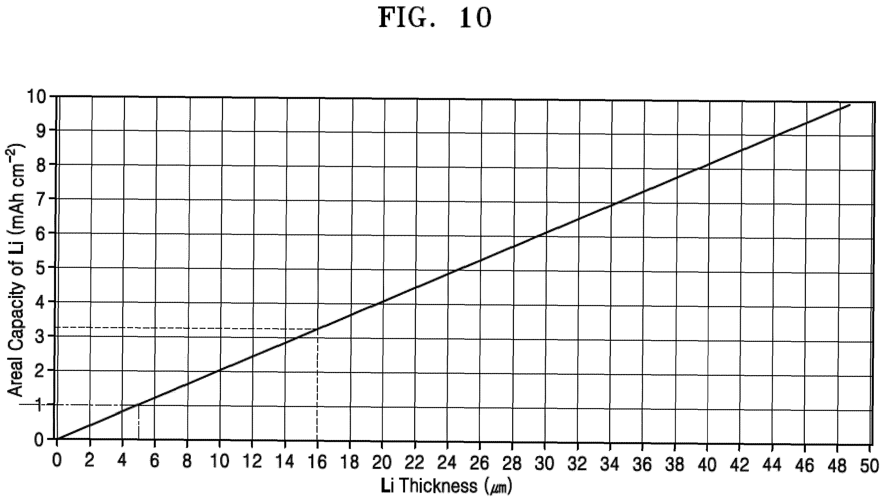

The thickness of the lithium deposition layer refers to the thickness of a deposition layer as a function of cathode areal capacity. The thickness of the lithium deposition layer varies depending on Li metal areal capacity (see FIG. 10).

Specific capacity of Li metal is 3,680 milliampere hour per gram (mAh/g), and when the true density of Li metal is 0.534 g/cm$^3$, and when the cathode areal capacity of 1 mAh/cm$^2$, the thickness of lithium deposition layer is about 5 $\mu$m. In addition, the area of an uptake room may be obtained by multiplying height (h) and width (w) of the uptake room as illustrated in FIG. 1.

Referring to FIG. 1, in an anode-solid electrolyte sub-assembly according to an embodiment, the height (h) of uptake room is about 5 $\mu$m to about 30 $\mu$m, the width of the uptake room is about 0.01 $\mu$m to about 0.3 $\mu$m, and the height (h1) of a base layer of solid electrolyte is about 5 $\mu$m to about 30 $\mu$m.

In the present specification, the height of the uptake room represents a major axis length along Y-axis, and the width of the uptake room represents a major axis length along X-axis.

The thickness of an insulation layer 24 may be formed to be equal to the thickness of an interlayer 23, or may be adjusted to be less than the thickness of the interlayer. According to an embodiment, the thickness of the insulation layer may be about 0.005 $\mu$m to about 0.02 $\mu$m, and the thickness of the interlayer may be about, for example, about 5 $\mu$m to about 10 $\mu$m. A thickness ratio of the insulation layer and the interlayer may be about 1:500 to about 1:1,000.

As such, in a case in which the thickness of the interlayer 23 is greater than the thickness of the insulation layer 24, lithium deposition may take place more easily at interlayer 23, thus facilitating lithium deposition in the uptake room 22.

The insulation layer 24 may mitigate a short-circuit or leakage current in a battery. The insulation layer may contain an insulating material. Examples of the insulating material may include silicon dioxide ($SiO_2$), aluminum oxide ($Al_2O_3$), niobium oxide ($Nb_2O_5$), tantalum oxide ($Ta_2O_5$), titanium dioxide ($TiO_2$), zirconium oxide ($ZrO_2$), tin dioxide ($SnO_2$), zinc oxide (ZnO), or a combination thereof.

The thickness of the insulation layer may be about 0.001 $\mu$m to about 10 $\mu$m, about 0.002 $\mu$m to about 5 $\mu$m, about 0.003 $\mu$m to about 3 $\mu$m, about 0.005 $\mu$m to about 1 $\mu$m, or about 0.005 $\mu$m to about 0.2 $\mu$m. When the insulation layer has a thickness in the above ranges, lithium being deposited between the anode current collector and the areas outside the uptake rooms in the solid electrolyte may be effectively inhibited.

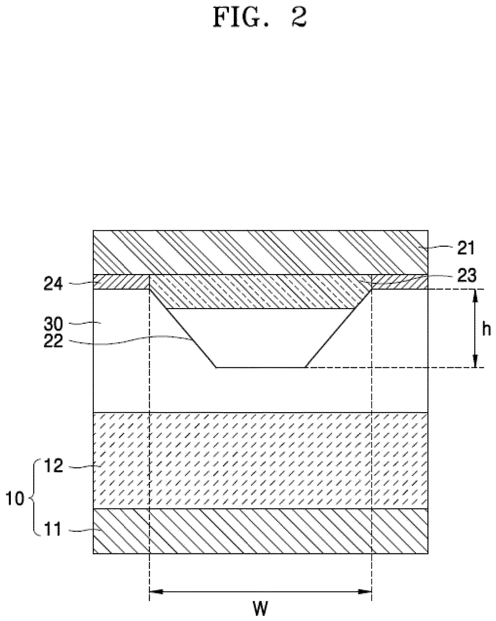

FIG. 2 schematically shows a structure of an anode-solid electrolyte sub-assembly for a solid-state secondary battery according to another embodiment.

The features in FIG. 2 are identical to those in FIG. 1, except for the shape of the uptake room. In the solid-state secondary battery shown in FIG. 1, the uptake room is a groove having a plate shape. In the solid-state secondary battery shown in FIG. 2, the uptake room is a groove having a hole-type shape.

FIG. 3 shows a direction of migration of lithium ions upon charging of the solid-state secondary battery in FIG. 1. Referring to FIG. 3, upon charging, lithium ions at the cathode migrate to the interlayer through the solid electrolyte, and the interlayer facilitates lithium deposition such that lithium deposition takes place from an area near the solid electrolyte and fills up to the center of the uptake room as shown in FIG. 3. As shown in FIG. 3, lithium metal may show more lithium deposition at the periphery of the uptake room than at the center thereof.

FIG. 4 shows a direction of migration of lithium ions upon discharging of the solid-state secondary battery in FIG. 2.

Deposited lithium, being deposited in the uptake rooms in the electrolyte upon charging of the solid-state secondary battery, may be deposited preferentially in a direction toward the electrolyte from a current collector. Lithium to be deposited may not be present in the form of a lithium alloy with an interlayer forming material, but may be deposited as lithium metal while being partially present as a lithium alloy.

According to an embodiment, the deposited lithium may be present as lithium metal.

According to another embodiment, the deposited lithium may be present as a Li-alloy with the interlayer forming material, and upon discharging, the deposited lithium may move onto a current collector above the uptake room, and as a result, a small amount of the interlayer forming material may be present as Li-alloys or with Li-alloys, thus terminating the discharging.

In a sub-assembly according to an embodiment, the minimum value of Von Mises stress applied to an upper anode corresponds to 0 (zero). The manufacturing of a battery module in a conventional anodeless solid-state secondary battery necessitates the use of buffers for severe thickness changes. However, using a sub-assembly according to an embodiment eliminates this need, thereby making it to further increase the energy density of a solid-states secondary battery. In addition, pressure issues resulting from lithium precipitates formed in cells and batteries may be addressed. In addition, fast migration of lithium ions facilitated by a solid-state electrolyte according to an embodiment may improve high-rate characteristics. Finally, as a sub-assembly according to an embodiment provides a zero-stress anode, zero stress may eliminate the use of buffer as an auxiliary pressure control method, and thus, such a sub-assembly when applied to a compact-size cylindrical cell (diameter: 14 mm, thickness: 5.4 mm) may significantly increase the energy density to about 800 Wh/L.

In an anode-solid electrolyte sub-assembly according to an embodiment, Von Mises stress at the interface of anode and solid electrolyte may be 0 upon charging and discharging.

A solid-state secondary battery according to an embodiment may have a single cell and a bicell structure.

The interlayer 23 may be positioned on the uptake room 22 of the solid electrolyte 30.

A solid-state secondary battery, upon repeated charging and discharging, may exhibit a severe accumulation of metal particles within the anode layer, thus causing its lifetime characteristics to deteriorate. However, as described above, in a solid-state secondary battery according to an embodiment, a decrease in lifetime characteristics may be effectively inhibited as a first metal material included in an interlayer remains in a nano-size without forming aggregates, even after charging and discharging.

In the specification, when layers do not have a uniform thickness, the thickness of said layers may be defined as an average value calculated from their respective thicknesses.

The interlayer, for example, may contain a lithium-free composite at the time of battery assembly, but after pressing and/or battery charging, may transform to a lithium-containing composite.

A solid-state secondary battery according to an embodiment may optimize the total thickness of battery by removing thickness changes due to lithium intercalation/deintercalation upon charging and discharging. The solid-state secondary battery may not require the application of a conventional buffer layer (gasket), and not only can have a high energy density, but also can have improved high-rate characteristics as lithium ion migration is maximized via interlayers through uptake rooms formed inside solid electrolyte. As a result, a solid-state secondary battery according to an embodiment may realize a high energy density up to about 800 Wh/L.

In the solid-state secondary battery in FIG. 1 and FIG. 2, a first anode active material layer (not illustrated) may be further positioned between the interlayer 23 and the anode current collector 21. The first anode active material layer may be added during battery assembly. Or, the first anode active material layer may be a deposition layer formed after the battery is charged. Even with this further inclusion of the first anode active material layer, there may be little change in thickness upon charging and discharging.

According to another embodiment, the anode current collector and interlayer, the first anode active material layer, or regions therebetween may be, in some cases, a lithium (Li) metal-free region not containing Li when the solid-state secondary battery is in the initial state of battery assembly or in a completely discharged state.

The first anode active material layer may be further formed as a deposition layer during the process of charging the solid-state secondary battery, or the process of disposing (e.g., contacting, bonding) an anode current collector on an interlayer, or during both of the aforementioned processes. Here, the first anode active material layer may be a lithium metal layer or a lithium metal alloy layer. According to one aspect, the first anode active material layer may be formed by a bonding process after contacting the interlayer with the anode current collector coated with lithium metal. For example, cold isostatic pressing (CIP) may be used to combine the layers together.

The first anode active material layer may include a third metal (M3). The third metal (M3) may be a metal characterized by reacting with lithium to form an alloy or a compound, or may be a metal that is not reactive with lithium.

According to an embodiment, the interlayer 23 may contain a carbonaceous active material. The carbonaceous active material may act as a buffer layer that can mitigate volume expansions caused by lithium deposition and desorption during charging and discharging.

The first anode active material layer may include a second metal material, and the second metal material may contain lithium, a third metal, a lithium alloy, or a combination thereof.

The third metal may be silver (Ag), tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), cerium (Ce), lanthanum (La), tungsten (W), tellurium (Te), or a combination thereof. In addition, the lithium alloy may include lithium in combination with silver (Ag), tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), nickel (Ni), iron (Fe), cobalt (Co), chromium (Cr), magnesium (Mg), cesium (Cs), cerium (Ce), lanthanum (La), tungsten (W), tellurium (Te), or a combination thereof.

The second metal material may be, for example, lithium metal, a lithium alloy, or a combination thereof.

According to an embodiment, a first anode active material layer may form a Li-third metal (that is, Li-M3) alloy as a second metal reacts with lithium deposited via a reversible reaction during charging and discharging of a solid-state secondary battery. As a result, the first anode active material layer may contain the Li-M3 alloy.

In particular, the first anode active material layer, from the initial state prior to charging (that is, before deposition occurs from charging) may be a layer of a single metal, such as Ag, Sn, and the like, or may be a layer of lithium metal alone.

In a case in which the first anode active material layer includes a lithium alloy, such as Ag-Li, the first anode active material layer may be formed as a silver layer at the time of battery assembly, and during the charging process, or the deposition process, or both of the aforementioned processes of the solid-state secondary battery, lithium may be deposited to the silver layer and form a lithium alloy layer, such as Ag-Li.

The first anode active material layer may have a thickness of about 20 nm to about 50 $\mu$m, about 50 nm to about 40 $\mu$m, about 100 nm to about 30 $\mu$m, or about 300 nm to about 20 $\mu$m. When the thickness of the first anode active material layer is within the above ranges, the solid-state secondary battery may have further improved cycle characteristics.

If the first anode active material layer is to be formed as a layer containing a third metal (M3) alone, such as a silver layer, at the time of batter assembly, the first anode active material layer may be formed to a thickness of about 20 nm to about 1 $\mu$m, about 100 nm to about 1 $\mu$m, or about 300 nm to about 600 nm, for example.

FIG. 1 and FIG. 2 are diagrams illustrating a solid-state secondary battery according to an embodiment.

Referring to FIG.1 and FIG. 2, the solid-state secondary battery is a secondary battery using a solid electrolyte as the electrolyte.

The solid-state secondary battery may include a cathode 10 and an anode-solid electrolyte sub-assembly 25.

Cathode

A cathode 10 may include a cathode current collector 11 and a cathode active material layer 12.

The cathode current collector 11 may be a plate, a foil, or the like, made of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

For example, the cathode active material layer 12 may include a cathode active material.

The cathode active material may be a cathode active material capable of intercalation and deintercalation of lithium ions in a reversible manner. Examples of the cathode active material may include a lithium transition metal oxide, such as lithium cobalt oxide (LCO), lithium nickel oxide, lithium nickel cobalt oxide, lithium nickel cobalt aluminum oxide (NCA), lithium nickel cobalt manganese oxide (NCM), lithium manganate, and lithium ion phosphate; and nickel sulfide, copper sulfide, lithium sulfide, iron oxide, vanadium oxide, or the like. The cathode active material is not limited to the aforementioned materials and may be any suitable material available as a cathode active material in the art. The cathode active material may be a single material or a mixture of two or more materials.

The cathode active material may be, for example, a compound represented by any one of the following formulas: $Li_aA_{1-b}B_bD_2$ (In the formula, $0.90 \leq a \leq 1$ and $0 \leq b \leq 0.5$); $Li_aE_{1-b}B_bO_{2-c}D_c$ (In the formula, $0.90 \leq a \leq 1$, $0 \leq b \leq 0.5$, and $0 \leq c \leq 0.05$); $LiE_{2-b}B_bO_{4-c}D_c$ (In the formula, $0 \leq b \leq 0.5$, and $0 \leq c \leq 0.05$); $Li_aNi_{1-b-c}Co_bB_cD_\alpha$ (In the formula, $0.90 \leq a \leq 1$, $0 \leq b \leq 0.5$, $0 \leq c \leq 0.05$, and $0 < \alpha \leq 2$); $Li_aNi_{1-b-c}Co_bB_cO_{2-\alpha}F_\alpha$ (In the formula, $0.90 \leq a \leq 1$, $0 \leq b \leq 0.5$, $0 \leq c \leq 0.05$, and $0 < \alpha < 2$); $Li_aNi_{1-b-c}Co_bB_cO_{2-\alpha}F_2$ (In the formula, $0.90 \leq a \leq 1$, $0 \leq b \leq 0.5$, $0 \leq c \leq 0.05$, and $0 < \alpha < 2$); $Li_aNi_{1-b-c}Mn_bB_cD_\alpha$ (In the formula, $0.90 \leq a \leq 1$, $0 \leq b \leq 0.5$, $0 \leq c \leq 0.05$, and $0 < \alpha \leq 2$); $Li_aNi_{1-b-c}Mn_bB_cO_{2-\alpha}F_\alpha$ (In the formula, $0.90 \leq a \leq 1$, $0 \leq b \leq 0.5$, $0 \leq c \leq 0.05$, and $0 < \alpha < 2$); $Li_aNi_{1-b-c}Mn_bB_cO_{2-\alpha}F_2$ (In the formula, $0.90 \leq a \leq 1$, $0 \leq b \leq 0.5$, $0 \leq c \leq 0.05$, and $0 < \alpha < 2$); $Li_aNi_bE_cG_dO_2$ (In the formula, $0.90 \leq a \leq 1$, $0 \leq b \leq 0.9$, $0 \leq c \leq 0.5$, and $0.001 \leq d \leq 0.1$); $Li_aNi_bCo_cMn_dGe_eO_2$ (In the formula, $0.90 \leq a \leq 1$, $0 \leq b \leq 0.9$, $0 \leq c \leq 0.5$, $0 \leq d \leq 0.5$, and $0.001 \leq e \leq 0.1$); $Li_aNiG_bO_2$ (In the formula, $0.90 \leq a \leq 1$, and $0.001 \leq b \leq 0.1$); $Li_aCoG_bO_2$ (In the formula, $0.90 \leq a \leq 1$, and $0.001 \leq b \leq 0.1$); $Li_aMnG_bO_2$ (In the formula, $0.90 \leq a \leq 1$, and $0.001 \leq b \leq 0.1$); $Li_aMn_2G_bO_4$ (In the formula, $0.90 \leq a \leq 1$, and $0.001 \leq b \leq 0.1$); $QO_2$; $QS_2$; $LiQS_2$; $V_2O_5$; $LiV_2O_5$; $LiIO_2$; $LiNiVO_4$; $Li_{(3-f)}J_2(PO_4)_3$ ($0 \leq f \leq 2$); $Li_{(3-f)}Fe_2(PO_4)_3$ ($0 \leq f \leq 2$); and $LiFePO_4$. In such a compound, A may be Ni, Co, Mn, or a combination thereof; B may be Al, Ni, Co, Mn, Cr, Fe, Mg, Sr, V, a rare-earth element, or a combination thereof; D may be O, F, S, P, or a combination thereof; E may be Co, Mn, or a combination thereof; F may be F, S, P, or a combination thereof; G may be Al, Cr, Mn, Fe, Mg, La, Ce, Sr, V, or a combination thereof; Q may be Ti, Mo, Mn, or a combination thereof; I may be Cr, V, Fe, Sc, Y, or a combination thereof; and J may be V, Cr, Mn, Co, Ni, Cu, or a combination thereof. A compound having a coating layer added on a surface of the above compound may also be used, and a mixture of the above compound with a compound having a coating layer added thereon may also be used. The coating layer added on the surface of the above compound may include, for example, compounds of a coating element, such as oxides and hydroxides of a coating element, oxyhydroxides of a coating element, oxycarbonates of a coating element, and hydroxycarbonates of a coating element. Compounds forming the above coating layer may be amorphous or crystalline. The coating element included in the coating layer may be Mg, Al, Co, K, Na, Ca, Si, Ti, V, Sn, Ge, Ga, B, As, Zr, or a combination thereof. The method by which the coating layer is formed may be selected from among methods that do not adversely affect the physical properties of a cathode active material. Examples of the coating method may include spray coating, dip coating, and the like. Specific coating methods are well-understood by those of ordinary skill in the art, and therefore will not be further described in detail.

The cathode active material may include, for example, among the aforementioned lithium transition metal oxides, a lithium salt of a transition metal oxide that has a layered rock-salt type structure. The term "layered rock salt type structure" may be, for example, a structure in which oxygen atom layers and metal atom layers are alternatingly regularly arranged in <111> direction of a cubic rock salt type structure, such that each atom layer forms a two-dimensional plane. The "cubic rock salt type" structure may represent a NaCl type structure, which is a type of lattice structure, and in particular, a structure in which the face centered cubic lattices (fcc) formed by cations and anions are positioned obliquely with respect to each other by 1/2 ridge of unit lattice. Examples of a lithium transition metal oxide having such a layered rock-salt type structure may be a ternary lithium transition metal oxide, such as $LiNi_xCo_yAl_zO_2$ (NCA) and $LiNi_xCo_yMn_zO_2$ (NCM) ($0 < x < 1$, $0 < y < 1$, $0 < z < 1$, and $x + y + z = 1$). When the cathode active material contains a ternary lithium transition metal oxide having a layered rock-salt type structure, the solid-state secondary battery may have further improved energy density and thermal stability.

The cathode active material may be covered by a coating layer, as described above. The coating layer may be any material known in the art as a coating layer for a cathode active material in a solid-state secondary battery. The coating layer may be, for example, $Li_2O$-$ZrO_2$.

When the cathode active material contains nickel (Ni) as a ternary transition metal oxide, such as NCA or NCM, it may increase capacity density of the solid-state secondary battery such that metal elution of the cathode active material in a charged state can decrease. Thus, the solid-state secondary battery may have improved cycle characteristics.

Here, the shape of the cathode active material may be, for example, a particle shape such as a true spherical shape or an elliptical spherical shape. In addition, a particle diameter of the cathode active material is not particularly limited and may be within a range that is applicable to a cathode active material in a conventional solid-state secondary battery. The amount of the cathode active material in the cathode 10 is not particularly limited and may be within a range that is applicable to a cathode 10 of a conventional solid-state secondary battery.

In addition to the above-described cathode active material, the cathode 10 may optionally further include other additives such as a conductive material, a binder, a filler, a dispersing agent, an ion conductivity aid, and the like. Examples of the conductive material may include graphite, carbon black, acetylene black, Ketjen black, carbon fibers, metal powder, and the like. Examples of the binder may include styrene butadiene rubber (SBR), polytetrafluoroethylene, polyvinylidene fluoride, polyethylene, and the like. For a coating agent, dispersing agent, and ion conductivity aid that can be mixed in the cathode 10, any known material generally used in an electrode of a solid-state secondary battery may be used.

The cathode 10 may optionally further include a solid electrolyte. The solid electrolyte included in the cathode 10 may be similar to or different from a solid electrolyte included in the solid electrolyte 30. More information on the solid electrolyte may be found in the description of the solid electrolyte 30.

Alternatively, the cathode 10 may be immersed in a liquid electrolyte, for example. The liquid electrolyte may include a lithium salt and at least one of an ionic liquid and a polymer ionic liquid. The liquid electrolyte may be non-volatile. The ionic liquid may refer to a room temperature molten salt or a salt in the liquid state at room temperature, which only contains ions and has a melting point less than or equal to room temperature. The ionic liquid may be one selected from compounds containing: a) at least one cation selected from among ammonium, pyrrolidinium, pyridinium, pyrimidinium, imidazolium, piperidinium, pyrazolium, oxazolium, pyridazinium, phosphonium, sulfonium, triazolium, and a mixture thereof; and b) at least one anion selected from among $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $Cl^-$, $Br^-$, $I^-$, $SO_4^-$, $CF_3SO_3^-$, $(FSO_2)_2N^-$, $(C_2F_5SO_2)_2N^-$, $(C_2F_5SO_2)(CF_3SO_2)N^-$, and $(CF_3SO_2)_2N^-$. Examples of the ionic liquid may include one or more selected from among N-methyl-N-propylpyrroldinium bis(trifluoromethanesulfonyl)imide, N-butyl-N-methylpyrrolidium bis(3-trifluoromethylsulfonyl)imide, 1-butyl- 3-methylimidazolium bis(trifluoromethylsulfonyl)imide, and 1-ethyl-3-methylimidazolium bis(trifluoromethylsulfonyl)imide. The polymer ionic liquid may contain a repeating unit including: a) at least one cation selected from among ammonium, pyrrolidinium, pyridinium, pyrimidinium, imidazolium, piperidinium, pyrazolium, oxazolium, pyridazinium, phosphonium, sulfonium, triazolium, and a mixture thereof; and b) at least one anion selected from among $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $(CF_3SO_2)_2N^-$, $(FSO_2)_2N^-$, $Cl^-$, $Br^-$, $I^-$, $SO_4^-$, $CF_3SO_3^-$, $(C_2F_5SO_2)_2N^-$, $(C_2F_5SO_2)(CF_3SO_2)N^-$, $NO_3^-$, $Al_2Cl_7^-$, $(CF_3SO_2)_3C^-$, $(CF_3)_2PF_4^-$, $(CF_3)_3PF_3^-$, $(CF_3)4PF_2^-$, $(CF_3)_5PF^-$, $(CF_3)_6P^-$, $SF_5CF_2SO_3^-$, $SF_5CHFCF_2SO_3^-$, $CF_3CF_2(CF_3)_2CO^-$, $CF_3SO_2)_2CH^-$, $(SF_5)_3C^-$, and $(O(CF_3)_2C_2(CF_3)_2O)_2PO^-$. The lithium salt may be any lithium salt available in the art. Examples of the lithium salt may include $LiPF_6$, $LiBF_4$, $LiSbF_6$, $LiAsF_6$, $LiClO_4$, $LiCF_3SO_3$, $Li(CF_3SO_2)_2N$, $Li(FSO_2)_2N$, $LiC_4F_9SO_3$, $LiAlO_2$, $LiAlCl_4$, $LiN(C_xF_{2x+1}SO2)(C_yF_{2y+1}SO_2)$ (Here, x and y each are a natural number), $LiCl$, $Lil$, or a mixture thereof. The concentration of a lithium salt included in the liquid electrolyte may be about 0.1 M to about 5 M. The amount of a liquid electrolyte in which the cathode 10 is immersed may be about 0 or about 0.1 part by weight to about 100 parts by weight, about 0 or about 0.1 part by weight to about 50 parts by weight, about 0 or about 0.1 part by weight to about 30 parts by weight, about 0 or about 0.1 part by weight to about 20 parts by weight, about 0 or about 0.1 part by weight to about 10 parts by weight, or about 0 or about 0.1 part by weight to about 5 parts by weight, with respect to 100 parts by weight of the cathode active material layer 12 without the liquid electrolyte.

Anode-Solid Electrolyte Sub-Assembly

An anode-solid electrolyte sub-assembly 25 may include an anode current collector 21, an interlayer 23, an insulation layer 24, and a solid electrolyte 30.

The solid electrolyte 30 may be disposed opposite the cathode 10.

The solid-state electrolyte may include an oxide-based solid electrolyte, a sulfide-based solid electrolyte, or a combination thereof.

The oxide-based solid-state electrolyte may be one or more selected from among $Li_{1+x+y}Al_xTi_{2-x}Si_yP_{3-y}O_{12}$ (0<x<2 and 0≤y<3), $Li_3PO_4$, $Li_xTi_y(PO_4)_3$ (0<x<2 and 0<y<3), $Li_xAl_yTi_z(PO_4)_3$ (0<x<2, 0<y<1, and 0<z<3), $Li_{1+x+y}(Al, Ga)_x(Ti, Ge)_{2-x}Si_yP_{3-y}O_{12}$ (0≤x≤1 and 0≤y≤1), $Li_xLa_yTiO_3$ (0<x<2 and 0<y<3), $Li_2O$, $LiOH$, $Li_2CO_3$, $LiAlO_2$, $Li_2O$-$Al_2O_3$-$SiO_2$-$P_2O_5$-$TiO_2$-$GeO_2$, and $Li_{3+x}La_3M_2O_{12}$ (M = Te, Nb, or Zr, and x is an integer of 1 to 10). The solid-state electrolyte may be prepared by a sintering method, or the like.

The oxide-based solid electrolyte may be, for example, a garnet-type solid electrolyte.

Non-limiting examples of the garnet-type solid electrolyte may include an oxide represented by Formula 1 below.

$$\text{Formula 1} \qquad (Li_xM1_y)(M2)_{3-\delta}(M3)_{2-\omega}O_{12-z}X_z$$

In Formula 1, $6 \leq x \leq 8$, $0 \leq y < 2$, $-0.2 \leq \delta \leq 0.2$, $-0.2 \leq \omega \leq 0.2$, and $0 < z < 2$

M1 may be a monovalent cation, a divalent cation, a trivalent cation, or a combination thereof,
M2 may be a monovalent cation, a bivalent cation, a trivalent cation, or a combination thereof,
M3 may be a monovalent cation, a bivalent cation, a trivalent cation, a tetravalent cation, a pentavalent cation, a hexavalent cation, or a combination thereof, and
X may be a monovalent anion, a divalent anion, a trivalent anion, or a combination thereof.

In Formula 1, examples of the monovalent cation may include Na, K, Rb, Cs, H, Fr, or the like, and examples of the divalent cation may include Mg, Ca, Ba, Sr, or the like. Examples of the trivalent cation may include In, Sc, Cr, Au, B, Al, Ga, or the like, and examples of the tetravalent cation may include Sn, Ti, Mn, Ir, Ru, Pd, Mo, Hf, Ge, V, Si, or the like. In addition, examples of the pentavalent cation may include Nb, Ta, Sb, V, P, or the like.

M1 may be hydrogen (H), iron (Fe), gallium (Ga), aluminum (Al), boron (B), beryllium (Be) or a combination thereof. M2 may be lanthanum (La), barium (Ba), calcium (Ca), strontium (Sr), yttrium (Y), bismuth (Bi), praseodymium (Pr), neodymium (Nd), actinium (Ac), samarium (Sm), gadolinium (Gd), or a combination thereof. M3 may be zirconium (Zr), hafnium (Hf), tin (Sn), niobium (Nb), titanium (Ti), vanadium (V), chromium (Cr), manganese (Mn), cobalt (Co), nickel (Ni), copper (Cu), molybdenum (Mo), tungsten (W), tantalum (Ta), magnesium (Mg), technetium (Tc), ruthenium (Ru), palladium (Pd), iridium (Ir), scandium (Sc), cadmium (Cd), indium (In), antimony (Sb), tellurium (Te), thallium (Tl), platinum (Pt), silicon (Si), aluminum (Al), or a combination thereof.

In Formula 1, the monovalent anion used as X may be a halogen atom, a pseudohalogen, or a combination thereof, the bivalent anion used as X may be $S^{2-}$ or $Se^{2-}$, and the trivalent anion used as X may be, for example, $N^{3-}$.

In Formula 1, $6.6 \leq x \leq 8$, $6.7 \leq x \leq 7.5$, or $6.8 \leq x \leq 7.1$.

Non-limiting examples of the garnet-type solid electrolyte may include an oxide represented by Formula 2 below.

$$\text{Formula 2} \qquad (Li_xM1_y)(La_{a1}M2_{a2})_{3-\delta}(Zr_{b1}M3_{b2})_{2-\omega}O_{12-z}X_z$$

In Formula 2, M1 may be hydrogen (H), iron (Fe), gallium (Ga), aluminum (Al), boron (B), beryllium (Be) or a combination thereof,

M2 may be barium (Ba), calcium (Ca), strontium (Sr), yttrium (Y), bismuth (Bi), praseodymium (Pr), neodymium (Nd), actinium (Ac), samarium (Sm), gadolinium (Gd) or a combination thereof,
M3 may be hafnium (Hf), tin (Sn), niobium (Nb), titanium (Ti), vanadium (V), chromium (Cr), manganese (Mn), cobalt (Co), nickel (Ni) ), copper (Cu), molybdenum (Mo), tungsten (W), tantalum (Ta), magnesium (Mg), technetium (Tc), ruthenium (Ru), palladium (Pd), iridium (Ir), scandium (Sc ), cadmium (Cd), indium (In), antimony (Sb), tellurium (Te), thallium (Tl), platinum (Pt), silicon (Si), aluminum (Al) or combinations thereof,

$$6 \leq x \leq 8, \ 0 \leq y < 2, \ -0.2 \leq \delta \leq 0.2, \ -0.2 \leq \omega \leq 0.2, \ 0 \leq z \leq 2,$$

$$a1 + a2 = 1, \ 0 < a1 \leq 1, \ 0 \leq a2 < 1,$$

$$b1 + b2 = 1, \ 0 < b1 < 1, \ \text{and} \ 0 \leq b2 < 1,$$

wherein X may be a monovalent anion, a bivalent anion, a trivalent anion, or a combination thereof.

In Formula 2, the monovalent anion used as X may be a halogen atom, a pseudohalogen, or a combination thereof, the bivalent anion used as X may be $S^{2-}$ or $Se^{2-}$, and the trivalent anion used as X may be, for example, $N^{3-}$.

In Formula 2, $6.6 \leq x \leq 8$, $6.7 \leq x \leq 7.5$, or $6.8 \leq x \leq 7.1$.

As used herein, the term "pseudohalogen" refers to a molecule which consists of two or more electronegative atoms similar to halogens in a free state, and generates anions similar to halide ions. Examples of the pseudohalogen may include a cyanide, a cyanate, a thiocyanate, an azide, or a combination thereof.

Examples of the halogen atom may include iodine (I), chlorine (Cl), bromine (Br), fluorine (F), or a combination thereof. Examples of the pseudohalogen may include a cyanide, a cyanate, a thiocyanate, an azide, or a combination thereof.

The trivalent anion may be, for example, $N^{3-}$.

In Formula 2, M3 may be Al, Ga, In, Si, Ge, Sn, Sb, Bi, Sc, Y, Ti, Hf, V, Nb, Ta, W, or a combination thereof.

According to another embodiment, the garnet-type solid electrolyte may be an oxide represented by Formula 3.

$$\text{Formula 3} \qquad Li_{3+x}La_3Zr_{2-a}M_aO_{12}$$

In Formula 3, M may be Al, Ga, In, Si, Ge, Sn, Sb, Bi, Sc, Y, Ti, Hf, V, Nb, Ta, W, or a combination thereof, wherein x is a number of 1 to 10, and $0 \leq a < 2$.

Examples of the garnet-type solid electrolyte may include $Li_7La_3Zr_2O_{12}$, $Li_{6.5}La_3Zr_{1.5}Ta_{0.5}O_{12}$, and the like.

Alternatively, the solid electrolyte may be a sulfide-based solid electrolyte, for example. The sulfide-based solid electrolyte may be, for example, one or more selected from among $Li_2S\text{-}P_2S_5$ and $Li_2S\text{-}P_2S_5\text{-}LiX$, wherein X is a halogen element; $Li_2S\text{-}P_2S_5\text{-}Li_2O$, $Li_2S\text{-}P_2S_5\text{-}Li_2O\text{-}LiI$, $Li_2S\text{-}SiS_2$, $Li_2S\text{-}SiS_2\text{-}LiI$, $Li_2S\text{-}SiS_2\text{-}LiBr$, $Li_2S\text{-}SiS_2\text{-}LiCl$, $Li_2S\text{-}SiS_2\text{-}B_2S_3\text{-}LiI$, $Li_2S\text{-}SiS_2\text{-}P_2S_5\text{-}LiI$, $Li_2S\text{-}B_2S_3$, and $Li_2S\text{-}P_2S_5\text{-}Z_mS_n$, wherein m and n each are a positive number, and Z is Ge, Zn or Ga; $Li_2S\text{-}GeS_2$, $Li_2S\text{-}SiS_2\text{-}Li_3PO_4$, and $Li_2S\text{-}SiS_2\text{-}Li_pMO_q$, wherein p and q each are a positive number and M is P, Si, Ge, B, Al, Ga or In; $Li_{7-x}PS_{6-x}Cl_x$, wherein $0 \leq x \leq 2$; $Li_{7-x}PS_{6-x}Br_x$, wherein $0 \leq x \leq 2$; and $Li_{7-x}PS_{6-x}I_x$, wherein $0 \leq x \leq 2$. The sulfide-based solid electrolyte may be prepared by treating a starting material, such as $Li_2S$ and $P_2S_5$, by melt-quenching, mechanical milling, and the like. In addition, after such a treatment, sintering may be conducted. The sulfide-based solid electrolyte may be amorphous or crystalline, or may be in a mixed state thereof.

In addition, as the sulfide-based solid electrolyte may be, among the sulfide-based solid electrolyte materials described herein, a material containing at least sulfur (S), phosphorus (P), and lithium (Li), as its constituting elements. For example, the sulfide-based solid electrolyte may be a material including $Li_2S\text{-}P_2S_5$. Here, when the sulfide-based solid electrolyte material used includes $Li_2S\text{-}P_2S_5$, a mixing molar ratio of $Li_2S$ and $P_2S_5$ may be, for example, in a range of $Li_2S : P_2S_5$ = about 50:50 to about 90:10.

The sulfide-based solid electrolyte may be an argyrodite-type compound including one or more selected from among $Li_{7-x}PS_{6-x}Cl_x$ wherein $0 \leq x \leq 2$, $Li_{7-x}PS_{6-x}Br_x$ wherein $0 \leq x \leq 2$, and $Li_{7-x}PS_{6-x}I_x$ wherein $0 \leq x \leq 2$. In particular, the sulfide-based solid electrolyte included in the solid electrolyte may be an argyrodite-type compound including at least one selected from among $Li_6PS_5Cl$, $Li_6PS_5Br$, and $Li_6PS_5I$.

A solid electrolyte 30 may further include a binder, for example. Examples of the binder included in the solid electrolyte 30 may include styrene butadiene rubber (SBR), polytetrafluoroethylene, polyvinylidene fluoride, polyethylene, and the like. However, the binder is not limited to the aforementioned materials and may be any suitable binder available in the art. The binder in the solid electrolyte 30 may be of the same type as, or a different type from, a binder included in the cathode active material layer 12 and the anode active material layer.

In the anode-solid electrolyte sub-assembly 25, the anode current collector 21 may consist of, for example, a material that does not react with lithium, that is, does not form an alloy or compound. The material forming the anode current collector 21 may be, for example, copper (Cu), stainless steel, titanium (Ti), iron (Fe), cobalt (Co), nickel (Ni), and the like, but is not necessarily limited thereto, and may be any suitable material available as an electrode current collector in the art. The anode current collector 21 may consist of one of the aforementioned metals, or an alloy of two or more metals, or a coating material. The anode current collector 21 may be, for example, a plate shape or a foil shape.

Hereinbelow, a method of preparing a solid-state secondary battery according to an embodiment will be described in greater detail with reference to the accompanied drawings.

A method of preparing a solid-state secondary battery may include: forming an insulation layer on a first side of a solid electrolyte to thereby prepare the solid electrolyte having the insulation layer disposed thereon; removing a portion of the insulation layer and a portion of the solid electrolyte to form a plurality of uptake rooms providing space for storing lithium within the solid electrolyte, each of the plurality of uptake rooms having an opening on the first side of the solid electrolyte; forming an interlayer on an anode current collector to thereby form the anode current collector having the interlayer disposed thereon; disposing, on the solid electrolyte having the plurality of uptake rooms formed therein, the anode current collector having the interlayer disposed thereon, and disposing the interlayer opposite to the plurality of uptake rooms to form an anode-solid electrolyte sub-assembly; and disposing a cathode on a second side of the solid electrolyte of the anode-solid electrolyte sub-assembly. The second side of the solid electrolyte is opposite to the first side of the solid electrolyte.

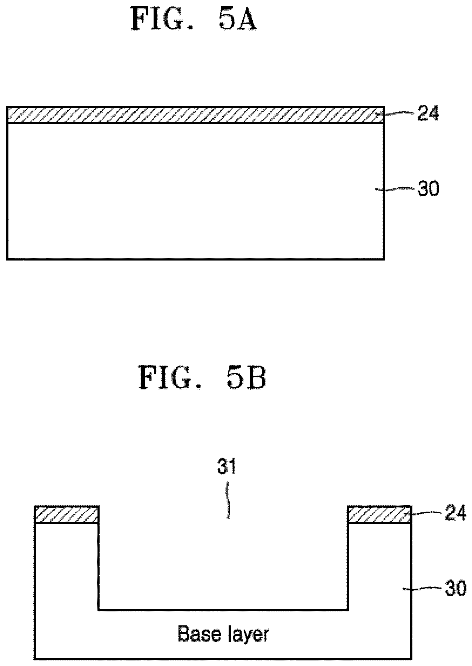

An insulation layer 24 may be formed on one side of a solid electrolyte 30 to form the solid electrolyte 30 having the insulation layer 24 formed on a surface thereof (FIG. 5A).

The process of forming the insulation layer on one side of the solid electrolyte may utilize, for example, atomic layer deposition (ALD technique) but is not limited thereto.

Examples of insulating materials may include inorganic oxide particles, such as aluminum oxide (alumina, $Al_2O_3$), aluminum oxide hydrate (boehmite, AlOOH), gibbsite ($Al(OH)_3$), silicon oxide, magnesium oxide (magnesia), magnesium hydroxide, calcium oxide, titanium oxide (titania), barium titanate ($BaTiO_3$), ZrO, silica, alumina-silica complex oxide; nitride particles, such as aluminum nitride and boron nitride; covalent crystal particles, such as silicon and diamond; poorly soluble ionic crystal particles, such as barium sulfate, calcium fluoride, and barium fluoride; and clay microparticles such as talc and montmorillonite.

The process of providing a plurality of uptake rooms which provide space for storing lithium within the solid electrolyte 30 may be conducted by forming a groove 31 inside the solid electrolyte (FIG. 5B) by subjecting the solid electrolyte 30 having the insulation layer 24 formed on a surface thereof, to a treatment by laser drilling, stamping, etching, chemical milling, laser scribing, water-jet cutting, nano imprinting, a multi-layer ceramic capacitor (MLCC), a tape casting process, or a combination thereof. The groove may have a plate or hole shape, but is not limited thereto. In FIG. 5B, a base layer represents the area of solid electrolyte that contains no uptake rooms formed therein.

The process of forming an interlayer 23 on an anode current collector 21 to thereby provide the anode current collector 21 having the interlayer 23 disposed thereon may be conducted through the process of coating and drying an interlayer forming composition.

The interlayer 23 may include a carbonaceous anode active material, a second metal, a metalloid, or a combination thereof, or may include a mixed conductive material.

The interlayer may be formed through the process of coating and drying, on the anode current collector, an interlayer forming composition. The interlayer forming composition contains i) a carbonaceous anode active material. Or the interlayer forming composition contains ii) a carbonaceous anode active material, a second metal (M2), a metalloid, or a combination thereof.

According to an embodiment, the interlayer may be formed only in an area corresponding to the uptake rooms by coating an interlayer forming composition on a film that indicates uptake rooms in the solid electrolyte.

According to another embodiment, the interlayer may be prepared through the process of coating and drying the interlayer forming composition on a first substrate that is not an anode current collector, and the process of disposing the product obtained from the previous process, on an anode current collector and separating the first substrate therefrom.

The first substrate may be composed of a material that does not react with lithium, for example, a material that does not form an alloy or a compound with lithium. Examples of material forming a substrate may include copper (Cu), stainless steel, titanium (Ti), iron (Fe), cobalt (Co), nickel (Ni), and the like, but are not necessarily limited thereto. The material forming a substrate may be any material available as an electrode current collector in the art. The first substrate be composed of one of the aforementioned metals, or an alloy of two or more metals thereof, or a coating material. The first substrate may be in a plate shape or a foil shape. For example, the first substrate may be a stainless steel substrate.

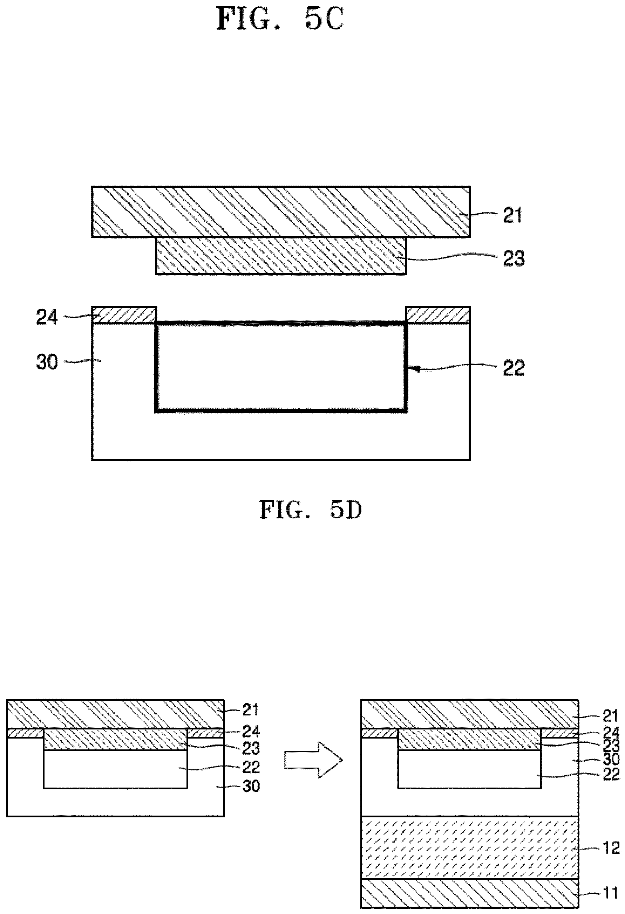

An interlayer 23 pattern may be formed by removing the interlayer in an area of the anode current collector 21 having the interlayer 23 disposed thereon, and this interlayer 23 pattern may be positioned on top of the solid electrolyte 30 having a plurality of uptake rooms 22 formed therein (FIG. 5C). In addition, the interlayer 23 may be disposed opposite to the plurality of uptake rooms to thereby form an anode-solid electrolyte sub-assembly according to an embodiment. In addition, a cathode active material layer 12 disposed on a cathode current collector 11 may be disposed on the other side of the solid electrolyte to thereby form a solid-state secondary battery in a single cell (FIG. 5D).

The process of providing a first anode active material layer between the anode current collector and interlayer may be further included. Here, the first anode active material layer may be formed in a manner that it does not cause a volume change of the battery.

The first anode active material layer may include a third metal. The third metal may include one or more selected from among lithium, silver (Ag), tin (Sn), indium (In), silicon (Si), gallium (Ga), aluminum (Al), Titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), cerium (Ce), lanthanum (La), tungsten (W), tellurium (Te), and a lithium alloy.

The lithium alloy may include lithium in combination with silver (Ag), tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), cerium (Ce), lanthanum (La), tungsten (W), tellurium (Te), or a combination thereof.

The first anode active material layer may be further formed as a deposition layer during the charging process or disposition process of the solid-state secondary battery, or both of the aforementioned processes. Examples of the first anode active material layer may include lithium metal, a lithium alloy, or a combination thereof.

A solid-state secondary battery in a bicell structure may be prepared as follows.

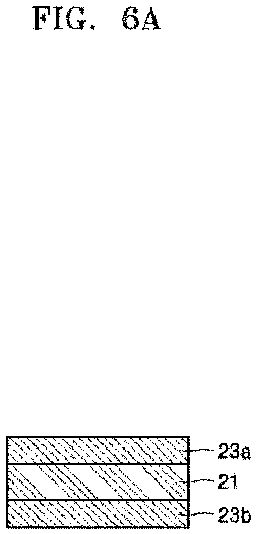

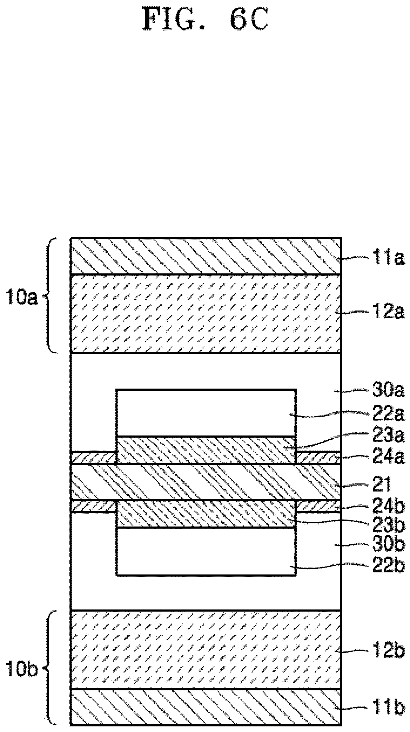

As shown in FIG. 6A, a first interlayer 23a and a second interlayer 23b may be formed on both surfaces of an anode current collector 21. Then, by removing a portion of the first interlayer 23a and a portion of the second interlayer 23b on the anode current collector 21, the anode current collector 21 having a pattern of the first interlayer 23a and a pattern of 23b formed thereon may be prepared.

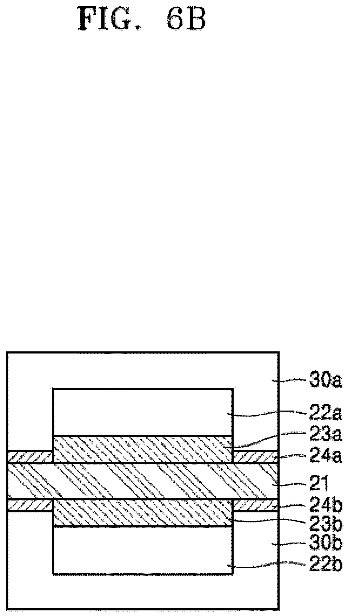

The first interlayer 23a and the second interlayer 23b of the anode current collector 21 having a pattern of the first interlayer 23a and a pattern of the second interlayer 23b formed on both sides thereof may be disposed, respectively, in uptake rooms 22a, 22b of solid-state electrolytes 30a and 30b having a plurality of uptake rooms 22a, 22b formed therein (FIG. 6B). The insulation layers 24a and 24b can be disposed between, and optionally in direct contact with, the anode current collector 21 and the solid electrolytes 30a and 30b in the portions that do not have uptake rooms.

Cathode active material layers 12a and 12b having a cathode current collector 11a or 11b disposed thereon may be disposed on the other side of the solid electrolytes 30a and 30b, to thereby form a solid-state secondary battery in a bicell structure.

A process of disposing, for example, bonding, the first anode active material layer on an interlayer by pressing or compression may be included. During the compression process, some of lithium in the first anode active material layer may be inserted into an interlayer.

A pressure applied during the press or compression may be 150 MPa or more, for example. The pressure applied during the pressing or compression may be 250 MPa or more, for example. For example, the pressure applied during the press or compression may be about 150 MPa to about 10,000 MPa, about 300 MPa to about 5,000 MPa, or about 500 MPa to about 2,000 MPa.

The duration for which the pressure is applied may be for 10 minutes or less. For example, the duration for which the pressure is applied may be about 5 milliseconds (ms) to about 10 minutes (min). For example, the duration for which the pressure is applied may be about 2 minutes to about 7 minutes.

The press may be conducted at room temperature (25 °C). For example, the press may be conducted at about 15 °C to about 25 °C. However, the temperature at which the pressure is applied is not necessarily limited to the aforementioned, and may be a temperature of about 25 °C to about 90 °C, at a high temperature of 100 °C or more, for example, about 100 °C to about 500 °C.

The press may be conducted by techniques such as roll press, uni-axial pressing, flat press, warm isostatic pressing (WIP), cold isostatic pressing (CIP), and the like. However, the press is not necessarily limited to the aforementioned techniques and may be any press method available in the art.

The first anode active material layer may be a lithium deposition layer that induces deposition of lithium metal on the anode current collector 21 to thereby prevent the solid electrolyte and lithium metal from being in direct contact with each other.

The first anode active material layer may be lithium metal or a third metal directly coated on a current collector. In addition, the first anode active material layer may be a lithium metal or lithium alloy layer deposited during charging. Lithium deposition during charging may lead to an increase in volume and thickness of a first anode active material layer. In particular, the third metal may form an Li-M3 alloy via a reversible reaction during charging and discharging of the solid-state secondary battery. During the charging process or disposition process of the solid-state secondary battery, or during both of the aforementioned processes, the first anode active material layer may be formed as a deposition layer, and the first anode active material layer may be a lithium metal layer or a lithium metal alloy layer.

During the charging process or disposition process of the solid-state secondary battery, or during both of the aforementioned processes, the second metal in the interlayer may form an alloy with lithium.

The method of preparing a solid-state secondary battery may include the process of disposing, by pressing, the first anode active material layer on the interlayer and the electrolyte assembly. During the press process, some of lithium present in the first anode active material layer may be inserted into the interlayer.

The disposition (e.g., bonding) may be a press or compaction process. During the press process, some of lithium present in the first anode active material layer may be inserted into an interlayer. Accordingly, the interlayer may include a carbonaceous active material and lithium, or may include a composite including a mixed conductive material and a lithium-M1 alloy.

According to another embodiment, a first anode active material layer may be further formed as a deposition layer during the charging process or disposition process of the solid-state secondary battery, or during both of the aforementioned processes. The first anode active material layer may be a lithium metal layer or a lithium metal alloy layer. The first anode active material layer may have a thickness of 1 $\mu$m or more, 5 $\mu$m or more, 10 $\mu$m or more, about 10 $\mu$m to about 1,000 $\mu$m, about 10 $\mu$m to about 500 $\mu$m, about 10 $\mu$m to about 200 $\mu$m, 10 $\mu$m to about 100 $\mu$m, or about 10 $\mu$m to about 50 $\mu$m.

Preparation of Cathode

Materials forming a cathode active material layer 12, such as a cathode active material, a binder, etc., were added to a nonpolar solvent to produce a slurry. The produced slurry was coated and dried on a cathode current collector 11. The laminate obtained therefrom was pressed to produce a cathode 10. The press may be conducted using methods such as a roll press, a flat press, and a hydrostatic pressure, but is not necessarily limited to the aforementioned methods and may be any press available in the art. The press process may be omitted. A mixture of materials forming the cathode active material layer 12 may be compacted in a pellet form, or may be stretched (molded) into a sheet form to thereby produce the cathode 10. When the cathode 10 is prepared as described above, the cathode current collector 11 may be omitted. Alternatively, the cathode 10 may be immersed in an electrolyte solution and used.

Preparation of Solid Electrolyte

A solid electrolyte 30 including an oxide-based solid electrolyte may be prepared, for example, by heat-treating a precursor of an oxide-based solid electrolyte material.

The oxide-based solid electrolyte may be prepared by contacting precursors with one another in a stoichiometric amount to form a mixture, and heat-treating the mixture. The contacting may be conducted by, for example, grinding or milling such as ball milling. The mixture of precursors mixed in a stoichiometric composition may undergo a first heat-treatment in an oxidizing atmosphere, to produce a product of the first heat-treatment. The first heat-treatment may be conducted at a temperature of 1,000 °C or less, for about 1 hour to about 36 hours. The product of the first heat-treatment may be ground. The grinding of the product of the first heat-treatment may be performed in a dry or wet manner. The wet grinding may be conducted, for example, by mixing the product of the first heat-treatment with a solvent such as methanol, and then milling the resulting mixture by a ball mill or the like, for about 0.5 hours to about 10 hours. The dry grinding may be conducted by milling, using a ball mill and the like, without solvent. The ground product of the first heat-treatment may have a particle diameter of about 0.1 $\mu$m to about 10 $\mu$m, or about 0.1 $\mu$m to about 5 $\mu$m. The ground product of the first heat-treatment may be dried. The ground product of the first heat-treatment may be mixed with a binder solution and molded into a pellet form, or may be simply pressed by a pressure of about 1 ton to about 10 tons and molded into a pellet form.

The molded product may undergo a second heat-treatment at a temperature of less than or equal to 1,000 °C, for about 1 hour to about 36 hours. A solid electrolyte layer 30, which is a sintered product from the second heat-treatment, may be obtained. The second heat-treatment may be conducted at a temperature of about 550 °C to about 1,000 °C, for example. The duration of the second heat-treatment may be about 1 hour to about 36 hours. To produce a sintered product, the temperature of the second heat-treatment may be higher than the temperature of the first heat-treatment. For example, the temperature of the second heat-treatment may be higher than the temperature of the first heat-treatment, by 10 °C or more, 20 °C or more, 30 °C or more, or 50 °C or more. The molded product may undergo a second heat-treatment in at least one of an oxidizing atmosphere or a reducing atmosphere. The second heat-treatment may be conducted in a) an oxidizing atmosphere, b) a reducing atmosphere, or c) an oxidizing atmosphere and a reducing atmosphere.

Preparation of Solid-State Secondary Battery

A solid-state secondary battery may be prepared by stacking the anode-solid electrolyte sub-assembly 25 and cathode 10 prepared as above, and then pressing the stack.

The press may be conducted by techniques such as roll pressing, uni-axial pressing, flat pressing, warm isostatic pressing (WIP), cold isostatic pressing (CIP), and the like. However, the press is not necessarily limited to the aforementioned techniques and may be any press method available in the art. A pressure applied during the press may be about 50 MPa to about 750 MPa, for example. The duration for which the pressure is applied may be about 5 milliseconds to about 5 minutes. The press may be conducted, for example, at room temperature, a temperature of 90 °C or less, or a temperature of about 20 °C to about 90 °C. Alternatively, the press may be conducted at a high temperature of 100 °C or more.

Next, the cathode 10 may be placed on the other side of the solid electrolyte 30 bonded to the anode and pressed thereon by a predetermined pressure, to thereby dispose, e.g., bond the cathode 10 on the other side of the solid electrolyte 30. Alternatively, in a case in which the cathode 10 is immersed in a liquid electrolyte solution, a battery may be prepared by stacking the cathode 10 without pressing.

The pressing may be conducted by techniques such as roll pressing, uni-axial pressing, flat pressing, warm isostatic pressing (WIP), cold isostatic pressing (CIP), and the like. However, the pressing is not necessarily limited to the aforementioned techniques and may be any press method available in the art. A pressure applied during the pressing may be about 50 MPa to about 750 MPa, for example. The duration for which the pressure is applied may be about 5 milliseconds to about 5 minutes. The pressing may be conducted, for example, at room temperature, a temperature of 90 °C or less, or a temperature of about 20 °C to about 90 °C. Alternatively, the pressing may be conducted at a high temperature of 100 °C or more.

According to another embodiment, a battery may include a cathode and an anode-solid electrolyte sub-assembly according to an embodiment, disposed on the cathode, wherein the solid electrolyte may be disposed between the cathode and an anode current collector.

The cathode may contain a liquid electrolyte.

The anode-solid electrolyte sub-assembly may be the same as the above-described anode-solid electrolyte sub-assembly for a solid-state battery.

The composition and preparation method of a solid-state secondary battery described above are merely examples, and as such, appropriate modifications in its constitutive elements and preparation process may be possible.

The pressing may be omitted.

The present invention will be described in greater detail through the following examples and comparative examples. However, it will be understood that the examples are provided only to illustrate the present invention and not to be construed as limiting the scope of the claims.

EXAMPLE 1: NMC/LLZTO/Interlayer(AgC)+Insulation layer($Al_2O_3$)/Anode current collector(copper foil)

Preparation of Anode-Solid Electrolyte Sub-Assembly

As solid electrolyte, a LLZTO ($Li_{6.5}La_3Zr_{1.5}Ta_{0.5}O_{12}$) pellet having a thickness of 250 $\mu$m was prepared.

3 grams of carbon black (CB) having an average particle diameter of about 38 nm as a carbon compound and 1 gram of silver (Ag) particles having an average particle diameter of about 100 nm were mixed together and combined with a mixture obtained by mixing 2.692 grams of a PVA-PAA binder solution (Solvay Specialty Polymers. Solef 5130) with 7 grams of NMP (N-methyl-2-pyrrolidone), and the resulting mixture was subjected to first stirring at 1,000 rpm for 30 minutes to produce a slurry.

Then, the slurry was bar-coated on a stainless steel substrate and dried at room temperature (25 °C) for 1 hour and dried under vacuum at 120°C for 12 hours to produce a pre-interlayer.

The pre-interlayer was laminated on a copper (Cu) foil having a thickness of 10 $\mu$m, serving as an anode current collector, and the stainless steel substrate as removed therefrom to form an interlayer on the anode current collector.

On the solid electrolyte, an insulation layer was formed using aluminum oxide. On the solid electrolyte having the insulation layer formed thereon, laser drilling was performed to form uptake rooms providing space for storing lithium in an area of the solid electrolyte. The uptake rooms were formed to have a plate shape.

The anode current collector having the interlayer formed thereon was placed on the uptake rooms to thereby forming an anode-solid electrolyte sub-assembly. The anode current collector having the interlayer pattern was formed on the solid electrolyte having the plurality of uptake rooms in such a way that the interlayer faces the opening of the plurality of uptake rooms and the insulation layer faces the anode current collector to form an anode-solid electrolyte sub-assembly. The volume of the uptake rooms in the anode-solid electrolyte sub-assembly was controlled in accordance with a cathode capacity.

Preparation of Cathode

As cathode active material, $LiNi_{0.9}Co_{0.1}Mn_{0.1}O_2$ (NCM) was prepared. Also, polytetrafluoroethylene (manufactured by Du Pont, TEFLON® binder) was prepared as a binder. Here, the binder was dissolved in NMP in a concentration of 5 wt% and used as solution. In addition, Denka Black (DB) was prepared as a conductive agent.

Then, the aforementioned materials were mixed in a weight ratio of cathode active material : conductive agent : binder = 100 : 2 : 1 to form a mixture in the form of a slurry. The slurry was coated on a cathode current collector consisting of an aluminum foil having a thickness of 18 $\mu$m, and dried at 120 °C for 12 hours, and then compressed to thereby form a cathode including the cathode current collector and a cathode active material layer.

The cathode active material layer of the cathode thus formed was immersed in an electrolyte solution containing 2.0 M of lithium bis(fluorosulfonyl)imide (LiFSI) dissolved in ionic liquid PYR13FSI (N-propyl-N-methyl-pyrrolidinium bis(fluorosulfonyl)imide).

Preparation of Solid-State Secondary Battery

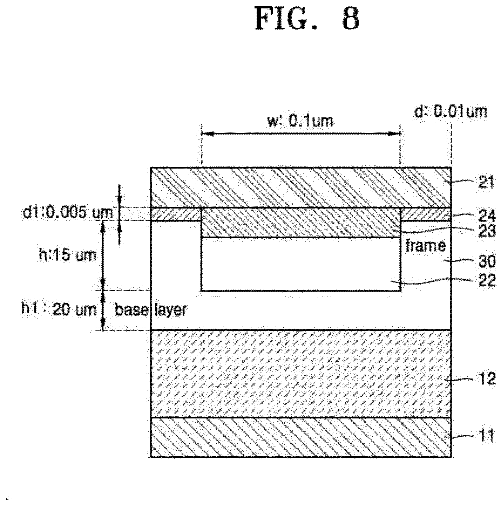

The cathode was placed in a SUS cap such that the cathode active material layer immersed in the ionic liquid-containing electrolyte solution faces upward. The solid electrolyte of the anode-solid electrolyte sub-assembly was placed on the cathode active material layer and sealed, to produce a solid-state secondary battery having a structure as shown in FIG. 8. In FIG. 8, the uptake room may have a width (W) of about 0.01 $\mu$m to about 0.3 $\mu$m, for example, 0.1 $\mu$m, and a height (h) of about 5 $\mu$m to about 30 $\mu$m, for example, about 15 $\mu$m to about 25 $\mu$m. In addition, a base layer of the solid electrolyte (not shown) may have a height of about 5 $\mu$m to about 30 $\mu$m, for example, 20 $\mu$m. In addition, a frame part of the solid electrolyte (30), when viewed from above the uptake rooms, may have a distance (d) of about 0.01 $\mu$m to about 0.1 $\mu$m, for example, 0.01 $\mu$m. In addition, on the area of the solid electrolyte that excludes the uptake rooms, an insulation layer 24 may be formed with a thickness (d1) of about 0.005 $\mu$m to about 0.02 $\mu$m, for example, 0.005 $\mu$m. According to Example 1, the uptake room may have a width (W) of 0.1 $\mu$m and a height (h) of 15 $\mu$m, the base layer of the solid electrolyte may have a height of 20 $\mu$m, the frame part may have a distance (d) of about 0.01 $\mu$m, and the insulation layer 24 may be formed with a thickness (d1) of about 0.005 $\mu$m. In addition, the volume of the uptake room was formed to correspond to a cathode capacity (for example, 3.2 mAh/$cm^2$).

The cathode and anode were insulated by an insulating material. Parts of the cathode current collector and anode current collector were projected from the sealed battery and used as a cathode layer terminal and an anode layer terminal.

In the solid-state secondary battery obtained from the above processes, upon charging, the interlayer on the anode current collector on the uptake rooms in the solid electrolyte may facilitate lithium deposition, such that lithium deposition takes place from an area near the solid electrolyte and fills up to the center of the uptake rooms. The deposited lithium may be present as a lithium-alloy with an interlayer material, and upon discharging, as the deposited lithium moves onto the anode current collector on the uptake room, resulting in a small amount of the interlayer material present as Li-alloys or with Li-alloys, the discharging was terminated.

Table 1 shows calculations of the volume of an uptake room, that is, the volume of lithium deposition, as a function of thickness of lithium deposition per cathode areal capacity. In Table 1 below, the deposited volume of lithium is identical to the volume of uptake room, and the deposited volume of lithium refers to the volume of lithium being precipitated upon charging.

Table 1

| Item | Cathode areal capacity (mAh/cm$^2$) | Area of uptake room (cm$^2$) | Lithium thickness (m) | Deposited volume of lithium (m$^3$) |
|---|---|---|---|---|
| 2D solid electrolyte | 3.2 | 1.13 X 10$^{-10}$ | 1.60 X 10$^{-5}$ | 1.8096 X 10$^{-19}$ |
| Example 1 (3D solid electrolyte) | 3.2 | 1.13 X 10$^{-10}$ | 1.60 X 10$^{-5}$ | 1.8096 X 10$^{-19}$ X 0.65* =1.17624 X 10-19 |

In Table 1, the area of the depression in the 2D solid electrolyte represents the area of the lithium deposition region.

*: X 0.65 in Table 1 is for converting a value of lithium deposition volume by 65% when using 2D solid electrolyte, taking into consideration a decrease in capacity versus 2D solid electrolyte resulting from lithium ions moving past the base layer of 3D solid electrolyte and migrating through solid electrolyte near the uptake rooms. As used herein, the term "3D solid electrolyte" refers to a solid electrolyte prepared according to Example 1 that includes uptake rooms capable of storing deposited lithium. As used herein, the term "2D solid electrolyte" refers to a solid electrolyte containing no uptake room capable of storing deposited lithium and also refers to cases of Example 1 where the solid electrolyte does not contain uptake rooms.

Example 2

A solid-state secondary battery was prepared following the same process in Example 1, except that the uptake room was formed as a groove having a hole shape during the preparation of the anode-solid electrolyte sub-assembly.

Comparative Example 1: Anodeless Solid-State Secondary Battery

Preparation of Anode-Solid Electrolyte Sub-Assembly

As a solid electrolyte, a LLZTO ($Li_{6.5}La_3Zr_{1.5}Ta_{0.5}O_{12}$) pellet having a thickness of 250 $\mu$m was prepared.

3 grams of carbon black (CB) having an average particle diameter of about 38 nm as a carbon compound and 1 gram of silver (Ag) particles having an average particle diameter of about 100 nm were mixed together and combined with a mixture obtained by mixing 2.692 grams of a PVA-PAA binder solution (Solvay Specialty Polymers. Solef 5130) with 7 grams of NMP (N-methyl-2-pyrrolidone), and the resulting mixture was subjected to first stirring at 1,000 rpm for 30 minutes to produce a slurry. Then, the slurry was bar-coated on a stainless-steel substrate and dried at room temperature (25 °C) for 1 hour and dried under vacuum at 120°C for 12 hours to produce a pre-interlayer.

The pre-interlayer was laminated on a copper (Cu) foil having a thickness of 10 $\mu$m, serving as an anode current collector, and the stainless-steel substrate was removed therefrom to form an interlayer on the anode current collector.

The anode current collector having the interlayer formed thereon was placed on the solid electrolyte to thereby produce an anodeless solid-state secondary battery.

In the solid-state secondary battery prepared according to Comparative Example 1, a lithium metal deposition layer was formed between the anode current collector and interlayer throughout charging.

Comparative Example 2: Anodeless Solid-State Secondary Battery

A solid-state secondary battery was manufactured in the same manner as in Comparative Example 1, except that the thickness of the solid electrolyte was changed to 500 μm.

Evaluation Example 1: SEM Analysis

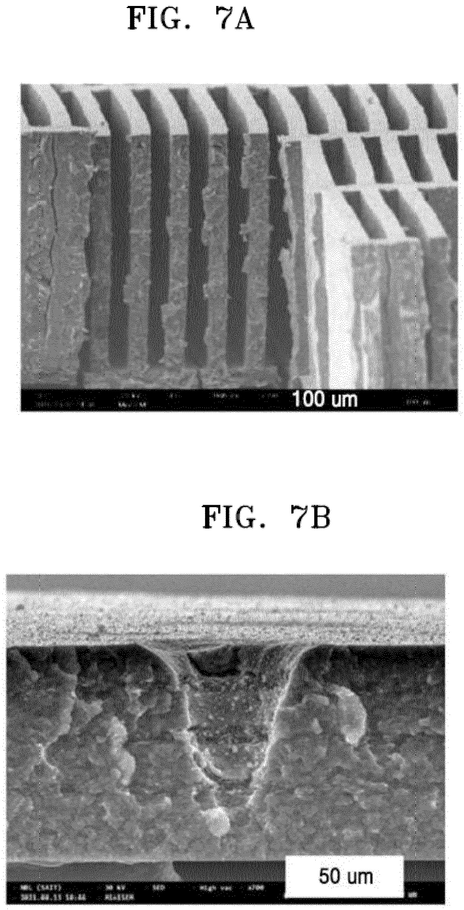

SEM analysis was performed on the solid-state secondary batteries prepared in Examples 1 and 2. The results of the analysis are shown in FIG. 7A and FIG. 7B. FIG. 7A and FIG. 7B are 1,000x magnified photographs.
As shown in FIG. 7A, the solid-state secondary battery of Example 1 exhibits a plate-shaped uptake room. In addition, as shown in FIG. 7B, the solid-state secondary battery of Example 2 shows that the shape of the uptake room has a hole structure.

Evaluation Example 2: COMSOL

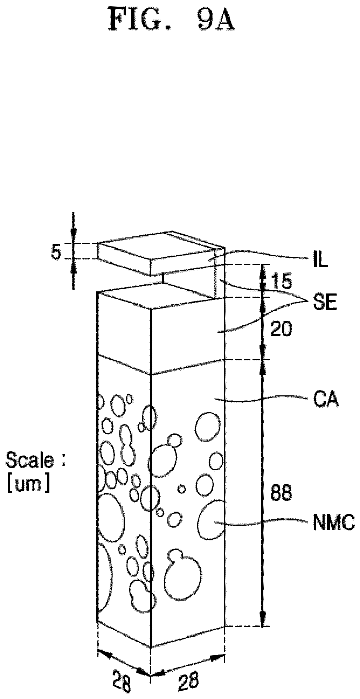

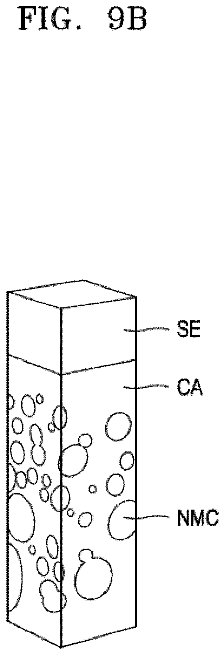

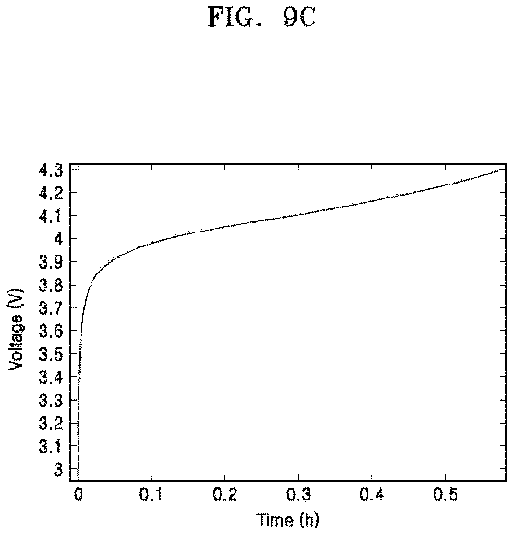

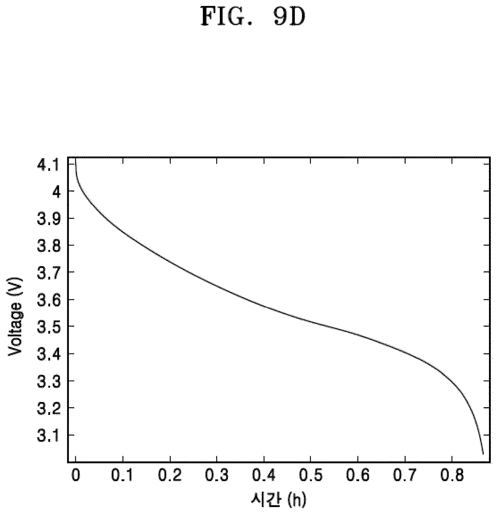

To evaluate the Von Mises stress at the anode/solid electrolyte interface in the solid-state secondary batteries of Example 1 and Comparative Example 2, two-dimensional constructs having structures in FIG. 9A and FIG. 9B were used as simulation samples, respectively. In FIG. 9A, IL, SE, and CA represent interlayer, solid electrolyte, and cathode, respectively, and NMC represents lithium-nickel-manganese-cobalt oxide particles as cathode active material.
Using the COMSOL analysis program, COMSOL Multiphysics® software, on the constructs, maximum and minimum values of the Von Mises stress at the anode/solid electrolyte interface were evaluated. Here, modeling of modulus of elasticity of the solid electrolyte, binder, and cathode was performed using the conditions shown in Tables 2 to 4. In Tables 2 to 4, modulus of elasticity, Poisson's ratios, and densities of solid electrolyte were obtained using the reference (Wolfenstine, J., Allen, J.L., Sakamoto, J. et al. Mechanical behavior of Li-ion-conducting crystalline oxide-based solid electrolytes: a brief review. Ionics 24, 1271-1276 (2018)), and modulus of elasticity, Poisson's ratios and densities of the binders were obtained using the reference (Journal of The Electrochemical Society, 164 (13) A3333-A3341 (2017)).

Table 2

| SE (Modulus of elasticity) | 150[GPa] |
|---|---|
| nu_SE (Poisson's ratio) | 0.25 |
| rho_SE (Density) | 5108[kg/m^3] |

Table 3

| Binder in CA(Modulus of elasticity) | 5[GPa] |
|---|---|
| nu_binder(Poisson's ratio) | 0.25 |
| rho_binder (Density) | 1000[kg/m^3] |

Table 4

| NMC(Modulus of elasticity) | 194[GPa] |
|---|---|
| nu_NMC (Poisson's ratio) | 0.25 |
| rho_NMC (Density) | 4.53[g/cm^3] |

The results of the evaluation are as shown in Table 5 below.

Table 5

| Item | Design | Charging start | Charging complete | Discharging start | Discharging complete |
|---|---|---|---|---|---|
| | Von Mises stress (MPa) | SE | SE | SE | SE |
| Comparative Example 2 | Anodeless + LLZO (thickness: 500um)(0.2C) | 0.88 | 5.21 | 20 | 0.58 |

(continued)

| Item | Design | Charging start | Charging complete | Discharging start | Discharging complete |
|---|---|---|---|---|---|
| | Von Mises stress (MPa) | SE | SE | SE | SE |
| Example 1 | Strain free anode LLZO(thickness: 20um) (0.2C) | 0 | 0 | 0 | 0 |

Referring to Table 5, it was found that according to Example 1, the value of Von Mises stress at the interlayer/solid electrolyte interface was minimum 0 (zero) upon charging/discharging, unlike Comparative Example 2, which is an anodeless battery.

Evaluation Example 3: Charge-Discharge Characteristics

To evaluate the Von Mises stress at the anode/solid electrolyte interface in a solid-state secondary battery, two-dimensional constructs having structures in FIG. 9A and FIG. 9B were used as simulation samples, respectively. LLZO having a thickness of 20 $\mu$m was used as the solid electrolyte, and the height of uptake room was about 15 $\mu$m.

Each of the features in Table 6 were evaluated as follows.

1) Rate characteristics

A solid-state secondary battery was charged to 4.3 V at a charging current of 0.1 C at 25 °C, and discharged to 2.3 V at a discharging current of 0.2 C for a charge-discharge test.

A charge-discharge test was performed at 1.0 C to measure rate characteristics. The rate characteristics are represented by Equation 2 below.

Rate characteristics (%) = (Discharge capacity at 1.0 C/Discharge capacity at 0.2 C) $\times$ 100          Equation 2

2) Changes in cell thickness

After performing the charge-discharge test, in which the battery was charged to an end-of-charge voltage of 4.3 V at a charging current of 0.1 C at 25 °C, and then discharged at a discharging current of 0.2 C to a cut-off voltage of 2.3 V, the cases with a cell thickness change of 1 % or more were indicated as ∘, and the cases with a cell thickness change of less than 1% were indicated as X.

Table 6

| Item | Thickness of solid electrolyte ($\mu$m) | Conductivity of interlayer (S/m) | Capacity, 0.2C (mAh/g) | Capacity, 1.0C (mAh/g) | Rate characteristics (%) | Change in cell thickness |
|---|---|---|---|---|---|---|
| CEx 3 | 500 | No interlayer | 180.41 | 122.92 | 68.1 | 14%@0.2C ○ |
| CEx 4 | 20 | No interlayer | 190.74 | 182.75 | 95.8 | 14.8%@0.2C ○ |
| Ex 4 | 20 | 0.0077 | 188.41 | 174.58 | 92.7 | 0%@0.2C X |

CEx 3 and CEx 4 in Table 6 refer to Comparative Example 3 and Comparative Example 4 respectively, and Ex 4 in Table 6 refers to Example 4.

As can be seen in Table 6, compared to the anode-less solid-state secondary battery of Comparative Example 3, the solid-state secondary battery of Example 4 exhibited improved high-rate characteristics and showed no change in cell thickness.

Meanwhile, the anode-less solid-state secondary battery of Comparative Example 4 showed superior high-rate characteristics compared to the solid-state secondary battery of Example 4, but requires a buffer layer for changes in the cell thickness and battery volume. Since this not only causes a decrease in energy density of the battery, but also gives rise to unsatisfactory lifetime characteristics, such a battery as the anode-less solid-state secondary battery of Comparative Example 4 may find very few practical applications.

Although one or more embodiments have been described with reference to the drawings and examples, these embodiments are merely exemplary, and those skilled in the art shall understand that various modifications and equivalent other embodiments are possible therefrom. Accordingly, the scope of the present application shall be defined by the appended claims.

By using an anode-solid electrolyte sub-assembly for a solid-state secondary battery according to an embodiment, a solid-state secondary battery may be prepared which shows no changes in thickness due to intercalation/deintercalation of lithium metal at anode upon charging and discharging, and as a result has improved high-rate characteristics, energy density, and lifetime characteristics.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope as defined by the following claims.

## Claims

1. An anode-solid electrolyte sub-assembly for a solid-state secondary battery, the anode-solid electrolyte sub-assembly comprising:

   an anode current collector;
   a solid electrolyte having

   a first portion with a plurality of uptake rooms providing space for storing lithium upon charging of the solid-state secondary battery, wherein an uptake room of the plurality of uptake rooms is an empty space recessed at an angle, from one side of the solid electrolyte, and
   a second portion without uptake rooms;

   an interlayer disposed on the anode current collector and between the anode current collector and the first portion of the solid electrolyte and facing an opening of the uptake rooms; and
   an insulation layer disposed between the anode current collector and the second portion of the solid electrolyte, for inhibiting lithium from being deposited between the anode current collector and areas other than the uptake rooms in the solid electrolyte.

2. The anode-solid electrolyte sub-assembly of claim 1, wherein the interlayer comprises an interlayer forming material having an ionic conductivity at 20°C of $10^{-8}$ S/cm or greater, and an electronic conductivity at 25 °C of $4.0 \times 10^{-9}$ S/cm or greater.

3. The anode-solid electrolyte sub-assembly of claims 1 or 2, wherein the plurality of uptake rooms contain a first metal material, and
   wherein the first metal material is lithium, a first metal (M1), a lithium-first metal alloy, or a combination thereof.

4. The anode-solid electrolyte sub-assembly of claim 3, wherein the first metal is tin, indium, silicon, gallium, aluminum, titanium, zirconium, niobium, germanium, antimony, bismuth, zinc, gold, platinum, palladium, nickel, iron, cobalt, chromium, magnesium, cesium, cerium, silver, sodium, potassium, calcium, yttrium, bismuth, tantalum, hafnium, barium, vanadium, strontium, tellurium, lanthanum, or a combination thereof, or an alloy of lithium and at least one of the foregoing;
   preferably wherein the first metal material is a Li-Ag alloy, a Li-Au alloy, a Li-Al alloy, a Li-Sn alloy, a Li-In alloy, a Li-Zn alloy, a Li-Ge alloy, a Li-Si alloy, a Li-Sb alloy, a Li-Bi alloy, a Li-Ga alloy, a Li-Na alloy, a Li-K alloy, a Li-Te alloy, a Li-Mg alloy, a Li-Mo alloy, a Li-Sn-Bi alloy, a Li-Sn-Ag alloy, a Li-Sn-Na alloy, a Li-Sn-K alloy, a Li-Sn-Ca alloy, a Li-Te-Ag alloy, a Li-Sb-Ag alloy, a Li-Sn-Sb alloy, a Li-Sn-V alloy, a Li-Sn-Ni alloy, a Li-Sn-Cu alloy, a Li-Sn-Zn alloy, a Li-Sn-Ga alloy, a Li-Sn-Ge alloy, a Li-Sn-Sr alloy, a Li-Sn-Y alloy, a Li-Sn-Ba alloy, a Li-Sn-Au alloy, a Li-Sn-La alloy, a Li-Al-Ga alloy, a Li-Mg-Sn alloy, a Li-Mg-Al alloy, a Li-Mg-Si alloy, a Li-Mg-Zn alloy, a Li-Mg-Ga alloy, a Li-Mg-Ag alloy, or a combination thereof.

5. The anode-solid electrolyte sub-assembly of any of claims 1-4, wherein the interlayer comprises: lithium; a carbonaceous compound; a mixture of a carbonaceous compound and a second metal, a metalloid, or a combination thereof; a composite of a carbonaceous compound and the second metal, the metalloid, or a combination thereof; or a combination thereof;
preferably

wherein the carbonaceous compound comprises amorphous carbon, and
wherein the amorphous carbon is carbon black, acetylene black, furnace black, Ketjen black, graphene, carbon nanotube, carbon nanofiber, or a combination thereof.

6. The anode-solid electrolyte sub-assembly of any of claims 1-5, wherein the uptake rooms comprise lithium; and/or wherein the interlayer has a thickness of 0.5 $\mu$m to 10 $\mu$m.

7. The anode-solid electrolyte sub-assembly of any of claims 1-6, wherein the insulation layer has a thickness equal to or less than a thickness of the interlayer, and
the thickness of the insulation layer is 0.001 $\mu$m to 10 $\mu$m.

8. The anode-solid electrolyte sub-assembly of any of claims 1-7, wherein a volume of each of the uptake rooms is determined by multiplying an area of the uptake room by a thickness of a lithium deposition layer; and/or
wherein the insulation layer comprises silicon dioxide, aluminum oxide, niobium oxide, tantalum oxide, titanium dioxide, zirconium oxide, tin dioxide, zinc oxide, or a combination thereof.

9. The anode-solid electrolyte sub-assembly of any of claims 1-8, wherein the anode-solid electrolyte sub-assembly has a Von Mises stress of 0 at an interface between the anode and the solid electrolyte upon charging and discharging, as measured according to the method of Evaluation Example 2 in the present specification.

10. A solid-state secondary battery comprising:

a cathode; and the anode-solid electrolyte sub-assembly of any of claims 1-9, disposed on the cathode,
wherein the solid electrolyte is disposed between the cathode and the anode current collector.

11. The solid-state secondary battery of claim 10, wherein the solid electrolyte comprises an oxide solid electrolyte, a sulfide solid electrolyte, or a combination thereof.

12. The solid-state secondary battery of claim 11, wherein the oxide solid electrolyte is an oxide represented by Formula 3:

Formula 3 $\qquad Li_{3+x}La_3Zr_{2-a}M_aO_{12}$

wherein in Formula 3, M is Al, Ga, In, Si, Ge, Sn, Sb, Bi, Sc, Y, Ti, Hf, V, Nb, Ta, W, or a combination thereof, x is a number of 1 to 10, and $0 \leq a < 2$.

13. A method of preparing a solid-state secondary battery, the method comprising:

forming an insulation layer on a first side of a solid electrolyte;
removing a portion of the insulation layer and a portion of the solid electrolyte to form a plurality of uptake rooms providing space for storing lithium within the solid electrolyte, each of the plurality of uptake rooms having an opening on the first side of the solid electrolyte;
forming an interlayer on an anode current collector; and removing a portion of the interlayer on the anode current collector, to provide an anode current collector having an interlayer pattern formed thereon;
disposing, on the solid electrolyte having the plurality of uptake rooms formed therein, the anode current collector having the interlayer pattern formed thereon in such a way that the interlayer faces the opening of the plurality of uptake rooms and the insulation layer faces the anode current collector to form an anode-solid electrolyte sub-assembly; and
disposing a cathode on a second side of the solid electrolyte of the anode-solid electrolyte sub-assembly, to thereby prepare the solid-state secondary battery of any of claims 10-12.

14. The method of claim 13, wherein the providing of a plurality of uptake rooms providing room for storing lithium within the solid electrolyte is carried out by laser drilling, stamping, etching, chemical milling, laser scribing, water-jet cutting, nano imprinting, or a combination thereof; and/or
wherein the interlayer comprises an interlayer forming material having an ionic conductivity at 20°C of $10^{-8}$ S/cm or greater and an electronic conductivity at 25 °C of $4.0 \times 10^{-9}$ S/cm or greater.

**Patentansprüche**

1. Anoden-Festelektrolyt-Unteranordnung für eine Festkörpersekundärbatterie, wobei die Anoden-Festelektrolyt-Unteranordnung Folgendes umfasst:

   einen Anodenstromkollektor;
   einen Festelektrolyten mit
   einem ersten Abschnitt mit einer Vielzahl von Aufnahmeräumen, die Platz zum Speichern von Lithium beim Laden der Festkörpersekundärbatterie bereitstellt, wobei ein Aufnahmeraum aus der Vielzahl von Aufnahmeräumen ein leerer Raum ist, der in einem Winkel von einer Seite des Festelektrolyten ausgespart ist, und einem zweiten Abschnitt ohne Aufnahmeräume;
   eine Zwischenschicht, die auf dem Anodenstromkollektor und zwischen dem Anodenstromkollektor und dem ersten Abschnitt des Festelektrolyten angeordnet und einer Öffnung der Aufnahmeräume zugewandt ist; und
   eine Isolierschicht, die zwischen dem Anodenstromkollektor und dem zweiten Abschnitt des Festelektrolyten angeordnet ist, um zu verhindern, dass Lithium zwischen dem Anodenstromkollektor und anderen Bereichen als den Aufnahmeräumen in dem Festelektrolyten abgeschieden wird.

2. Anoden-Festelektrolyt-Unteranordnung nach Anspruch 1, wobei die Zwischenschicht ein zwischenschichtbildendes Material umfasst, das eine Ionenleitfähigkeit bei 20 °C von $10^{-8}$ S/cm oder mehr und eine elektronische Leitfähigkeit bei 25 °C von $4,0 \times 10^{-9}$ S/cm oder mehr aufweist.

3. Anoden-Festelektrolyt-Unteranordnung nach Anspruch 1 oder 2, wobei die Vielzahl von Aufnahmeräumen ein Erstmetallmaterial enthält, und
   wobei das Erstmetallmaterial Lithium, ein erstes Metall (M1), eine Lithium-Erstmetall-Legierung oder eine Kombination davon ist.

4. Anoden-Festelektrolyt-Unteranordnung nach Anspruch 3, wobei das Erstmetall Zinn, Indium, Silizium, Gallium, Aluminium, Titan, Zirkonium, Niob, Germanium, Antimon, Wismut, Zink, Gold, Platin, Palladium, Nickel, Eisen, Kobalt, Chrom, Magnesium, Cäsium, Cer, Silber, Natrium, Kalium, Calcium, Yttrium, Wismut, Tantal, Hafnium, Barium, Vanadium, Strontium, Tellur, Lanthan oder eine Kombination davon oder eine Legierung von Lithium und zumindest einem des Vorstehenden ist;
   wobei bevorzugt das Erstmetallmaterial eine Li-Ag-Legierung, eine Li-Au-Legierung, eine Li-Al-Legierung, eine Li-Sn-Legierung, eine Li-In-Legierung, eine Li-Zn-Legierung, eine Li-Ge-Legierung, eine Li-Si-Legierung, eine Li-Sb-Legierung, eine Li-Bi-Legierung, eine Li-Ga-Legierung, eine Li-Na-Legierung, eine Li-K-Legierung, eine Li-Te-Legierung, eine Li-Mg-Legierung, eine Li-Mo-Legierung, eine Li-Sn-Bi-Legierung, eine Li-Sn-Ag-Legierung, eine Li-Sn-Na-Legierung, eine Li-Sn-K-Legierung, eine Li-Sn-Ca-Legierung, eine Li-Te-Ag-Legierung, eine Li-Sb-Ag-Legierung, eine Li-Sn-Sb-Legierung, eine Li-Sn-V-Legierung, eine Li-Sn-Ni-Legierung, eine Li-Sn-Cu-Legierung, eine Li-Sn-Zn-Legierung, eine Li-Sn-Ga-Legierung, eine Li-Sn-Ge-Legierung, eine Li-Sn-Sr-Legierung, eine Li-Sn-Y-Legierung, eine Li-Sn-Ba-Legierung, eine Li-Sn-Au-Legierung, eine Li-Sn-La-Legierung, eine Li-Al-Ga-Legierung, eine Li-Mg-Sn-Legierung, eine Li-Mg-Al-Legierung, eine Li-Mg-Si-Legierung, eine Li-Mg-Zn-Legierung, eine Li-Mg-Ga-Legierung, eine Li-Mg-Ag-Legierung oder eine Kombination davon ist.

5. Anoden-Festelektrolyt-Unteranordnung nach einem der Ansprüche 1-4, wobei die Zwischenschicht Folgendes umfasst: Lithium; eine kohlenstoffhaltige Verbindung; eine Mischung aus einer kohlenstoffhaltigen Verbindung und einem Zweitmetall, einem Halbmetall oder einer Kombination davon; einen Verbundstoff aus einer kohlenstoffhaltigen Verbindung und dem Zweitmetall, dem Halbmetall oder einer Kombination davon; oder eine Kombination davon;
   wobei bevorzugt

   die kohlenstoffhaltige Verbindung amorphen Kohlenstoff umfasst, und
   der amorphe Kohlenstoff Kohlenstoff-Ruß, Acetylen-Ruß, Ofen-Ruß, Ketjen-Ruß, Graphen, Kohlenstoff-Nanoröhrchen, Kohlenstoff-Nanofaser oder eine Kombination davon ist.

6. Anoden-Festelektrolyt-Unteranordnung nach einem der Ansprüche 1-5, wobei die Aufnahmeräume Lithium umfassen; und/oder
wobei die Zwischenschicht eine Dicke von 0,5 $\mu$m bis 10 $\mu$m aufweist.

7. Anoden-Festelektrolyt-Unteranordnung nach einem der Ansprüche 1-6, wobei die Isolierschicht eine Dicke aufweist, die gleich einer oder weniger als eine Dicke der Zwischenschicht ist, und
die Dicke der Isolierschicht 0,001 $\mu$m bis 10 $\mu$m ist.

8. Anoden-Festelektrolyt-Unteranordnung nach einem der Ansprüche 1-7, wobei ein Volumen von jedem der Aufnahmeräume durch Multiplizieren einer Fläche des Aufnahmeraums mit einer Dicke einer Lithiumabscheidungsschicht bestimmt wird; und/oder
wobei die Isolierschicht Siliziumdioxid, Aluminiumoxid, Nioboxid, Tantaloxid, Titandioxid, Zirkonoxid, Zinndioxid, Zinkoxid oder eine Kombination davon umfasst.

9. Anoden-Festelektrolyt-Unteranordnung nach einem der Ansprüche 1-8, wobei die Anoden-Festelektrolyt-Unteranordnung eine Von-Mises-Spannung von 0 an einer Schnittstelle zwischen der Anode und dem Festelektrolyten beim Laden und Entladen aufweist, wie gemäß dem Verfahren des Bewertungsbeispiels 2 in der vorliegenden Patentschrift gemessen.

10. Festkörpersekundärbatterie, umfassend:

eine Kathode; und die Anoden-Festelektrolyt-Unteranordnung nach einem der Ansprüche 1-9, die auf der Kathode angeordnet ist,
wobei der Festelektrolyt zwischen der Kathode und dem Anodenstromkollektor angeordnet ist.

11. Festkörpersekundärbatterie nach Anspruch 10, wobei der Festelektrolyt einen Oxidfestelektrolyten, einen Sulfidfestelektrolyten oder eine Kombination davon umfasst.

12. Festkörpersekundärbatterie nach Anspruch 11, wobei der Oxidfestelektrolyt ein Oxid dargestellt durch Formel 3 ist:

Formel 3 $\qquad$ $Li_{3+x}La_3Zr_{2-a}M_aO_{12}$

wobei in Formel 3 M Al, Ga, In, Si, Ge, Sn, Sb, Bi, Sc, Y, Ti, Hf, V, Nb, Ta, W oder eine Kombination davon ist, und x eine Zahl von 1 bis 10 ist und $0 \leq a < 2$.

13. Verfahren zur Herstellung einer Festkörpersekundärbatterie, wobei das Verfahren Folgendes umfasst:

Bilden einer Isolierschicht auf einer ersten Seite eines Festelektrolyten;
Entfernen eines Abschnittes der Isolierschicht und eines Abschnittes des Festelektrolyten, um eine Vielzahl von Aufnahmeräumen zu bilden, die Platz zum Speichern von Lithium innerhalb des Festelektrolyten bereitstellt, wobei jeder aus der Vielzahl von Aufnahmeräumen eine Öffnung auf der ersten Seite des Festelektrolyten aufweist;
Bilden einer Zwischenschicht auf einem Anodenstromkollektor; und Entfernen eines Abschnittes der Zwischenschicht auf dem Anodenstromkollektor, um einen Anodenstromkollektor bereitzustellen, auf dem ein Zwischenschichtmuster gebildet ist;
Anordnen, auf dem Festelektrolyten, der die Vielzahl von darin gebildeten Aufnahmeräumen aufweist, des Anodenstromkollektors, der das darauf gebildete Zwischenschichtmuster aufweist, auf eine solche Weise, dass die Zwischenschicht der Öffnung der Vielzahl von Aufnahmeräumen zugewandt ist und die Isolierschicht dem Anodenstromkollektor zugewandt ist, um eine Anoden-Festelektrolyt-Unteranordnung zu bilden; und
Anordnen einer Kathode auf einer zweiten Seite des Festelektrolyten der Anoden-Festelektrolyt-Unteranordnung, um dadurch die Festkörpersekundärbatterie nach einem der Ansprüche 10-12 herzustellen.

14. Verfahren nach Anspruch 13, wobei das Bereitstellen einer Vielzahl von Aufnahmeräumen, die Platz zum Speichern von Lithium innerhalb des Festelektrolyten bereitstellt, durch Laserbohren, Stanzen, Ätzen, chemisches Fräsen, Laserritzen, Wasserstrahlschneiden, Nanoprägen oder eine Kombination davon durchgeführt wird; und/oder
wobei die Zwischenschicht ein zwischenschichtbildendes Material umfasst, das eine Ionenleitfähigkeit bei 20 °C von

$10^{-8}$ S/cm oder mehr und eine elektronische Leitfähigkeit bei 25 °C von 4,0 x $10^{-9}$ S/cm oder mehr aufweist.

**Revendications**

1. Sous-ensemble anode-électrolyte solide pour une batterie secondaire à électrolyte solide, le sous-ensemble anode-électrolyte solide comprenant :

   un collecteur de courant d'anode,
   un électrolyte solide comportant
   une première partie avec une pluralité de chambres d'absorption fournissant un espace pour stocker le lithium lors de la charge de la batterie secondaire à électrolyte solide, dans lequel une chambre d'absorption de la pluralité de chambres d'absorption est un espace vide en retrait à un certain angle, d'un côté de l'électrolyte solide, et
   une seconde partie sans chambres d'absorption ;
   une couche intermédiaire disposée sur le collecteur de courant d'anode et entre le collecteur de courant d'anode et la première partie de l'électrolyte solide et faisant face à une ouverture des chambres d'absorption ; et
   une couche d'isolation disposée entre le collecteur de courant d'anode et la seconde partie de l'électrolyte solide, pour empêcher le dépôt de lithium entre le collecteur de courant d'anode et des zones autres que les chambres d'absorption dans l'électrolyte solide.

2. Sous-ensemble anode-électrolyte solide de la revendication 1, dans lequel la couche intermédiaire comprend un matériau formant une couche intermédiaire possédant une conductivité ionique à 20 °C de $10^{-8}$ S/cm ou plus, et une conductivité électronique à 25 °C de 4,0 x $10^{-9}$ S/cm ou plus.

3. Sous-ensemble anode-électrolyte solide de l'une des revendications 1 ou 2, dans lequel la pluralité de chambres d'absorption contient un premier matériau métallique, et
   dans lequel le premier matériau métallique est le lithium, un premier métal (M1), un alliage lithium-premier métal ou une combinaison de ceux-ci.

4. Sous-ensemble anode-électrolyte solide de la revendication 3, dans lequel le premier métal est l'étain, l'indium, le silicium, le gallium, l'aluminium, le titane, le zirconium, le niobium, le germanium, l'antimoine, le bismuth, le zinc, l'or, le platine, le palladium, le nickel, le fer, le cobalt, le chrome, le magnésium, le césium, le cérium, l'argent, le sodium, le potassium, le calcium, l'yttrium, le bismuth, le tantale, l'hafnium, le baryum, le vanadium, le strontium, le tellure, le lanthane, ou une combinaison de ceux-ci, ou un alliage de lithium et d'au moins l'un des éléments précédents ;
   de préférence dans lequel le premier matériau métallique est un alliage Li-Ag, un alliage Li-Au, un alliage Li-Al, un alliage Li-Sn, un alliage Li-In, un alliage Li-Zn, un alliage Li-Ge, un alliage Li-Si, un alliage Li-Sb, un alliage Li-Bi, un alliage Li-Ga, un alliage Li-Na, un alliage Li-K, un alliage Li-Te, un alliage Li-Mg, un alliage Li-Mo, un alliage Li-Sn-Bi, un alliage Li-Sn-Ag, un alliage Li-Sn-Na, un alliage Li-Sn-K, un alliage Li-Sn-Ca, un alliage Li-Te-Ag, un alliage Li-Sb-Ag, un alliage Li-Sn-Sb, un alliage Li-Sn-V, un alliage Li-Sn-Ni, un alliage Li-Sn-Cu, un alliage Li-Sn-Zn, un alliage Li-Sn-Ga, un alliage Li-Sn-Ge, un alliage Li-Sn-Sr, un alliage Li-Sn-Y, un alliage Li-Sn-Ba, un alliage Li-Sn-Au, un alliage Li-Sn-La, un alliage Li-Al-Ga, un alliage Li-Mg-Sn, un alliage Li-Mg-Al, un alliage Li-Mg-Si, un alliage Li-Mg-Zn, un alliage Li-Mg-Ga, un alliage Li-Mg-Ag ou une combinaison de ceux-ci.

5. Sous-ensemble anode-électrolyte solide de l'une quelconque des revendications 1 à 4, dans lequel la couche intermédiaire comprend : du lithium ; un composé carboné ; un mélange d'un composé carboné et d'un second métal, un métalloïde ou une combinaison de ceux-ci ; un composite d'un composé carboné et du second métal, un métalloïde ou une combinaison de ceux-ci ; ou une combinaison de ceux-ci ;
   de préférence

   dans lequel le composé carboné comprend du carbone amorphe, et
   dans lequel le carbone amorphe est le noir de carbone, le noir d'acétylène, le noir de fourneau, le noir de Ketjen, le graphène, un nanotube de carbone, une nanofibre de carbone ou une combinaison de ceux-ci.

6. Sous-ensemble anode-électrolyte solide de l'une quelconque des revendications 1 à 5, dans lequel les chambres d'absorption comprennent du lithium ; et/ou
   dans lequel la couche intermédiaire possède une épaisseur de 0,5 $\mu$m à 10 $\mu$m.

7. Sous-ensemble anode-électrolyte solide de l'une quelconque des revendications 1 à 6, dans lequel la couche d'isolation possède une épaisseur inférieure ou égale à une épaisseur de la couche intermédiaire, et l'épaisseur de la couche d'isolation est de 0,001 $\mu$m à 10 $\mu$m.

8. Sous-ensemble anode-électrolyte solide de l'une quelconque des revendications 1 à 7, dans lequel un volume de chacune des chambres d'absorption est déterminé en multipliant une surface de la chambre d'absorption par une épaisseur d'une couche de dépôt de lithium ; et/ou
dans lequel la couche d'isolation comprend du dioxyde de silicium, de l'oxyde d'aluminium, de l'oxyde de niobium, de l'oxyde de tantale, du dioxyde de titane, de l'oxyde de zirconium, du dioxyde d'étain, de l'oxyde de zinc ou une combinaison de ceux-ci.

9. Sous-ensemble anode-électrolyte solide de l'une quelconque des revendications 1 à 8, dans lequel le sous-ensemble anode-électrolyte solide possède une contrainte de Von Mises de 0 à une interface entre l'anode et l'électrolyte solide lors de la charge et de la décharge, telle que mesurée selon le procédé de l'exemple d'évaluation 2 dans la présente spécification.

10. Batterie secondaire à électrolyte solide comprenant :

    une cathode ; et le sous-ensemble anode-électrolyte solide de l'une quelconque des revendications 1 à 9, disposé sur la cathode,
    dans laquelle l'électrolyte solide est disposé entre la cathode et le collecteur de courant d'anode.

11. Batterie secondaire à électrolyte solide de la revendication 10, dans laquelle l'électrolyte solide comprend un électrolyte solide d'oxyde, un électrolyte solide de sulfure, ou une combinaison de ceux-ci.

12. Batterie secondaire à électrolyte solide de la revendication 11, dans laquelle l'électrolyte solide d'oxyde est un oxyde représenté par la Formule 3 :

    Formule 3          $Li_{3+x}La_3Zr_{2-a}M_aO_{12}$

    dans laquelle, dans la Formule 3, M est Al, Ga, In, Si, Ge, Sn, Sb, Bi, Sc, Y, Ti, Hf, V, Nb, Ta, W, ou une combinaison de ceux-ci,
    x est un nombre de 1 à 10, et $0 \leq a < 2$.

13. Procédé de préparation d'une batterie secondaire à électrolyte solide, le procédé comprenant :

    la formation d'une couche d'isolation sur un premier côté d'un électrolyte solide ;
    le retrait d'une partie de la couche d'isolation et d'une partie de l'électrolyte solide pour former une pluralité de chambres d'absorption fournissant un espace pour le stockage du lithium dans l'électrolyte solide, chacune de la pluralité de chambres d'absorption possédant une ouverture sur le premier côté de l'électrolyte solide ;
    la formation d'une couche intermédiaire sur un collecteur de courant d'anode ; et le retrait d'une partie de la couche intermédiaire sur le collecteur de courant d'anode, pour fournir un collecteur de courant d'anode comportant un motif de couche intermédiaire formé sur celui-ci ;
    la disposition, sur l'électrolyte solide possédant la pluralité de chambres d'absorption formées dans celui-ci, du collecteur de courant d'anode comportant le motif de couche intermédiaire formé sur celui-ci de manière telle que la couche intermédiaire soit orientée vers l'ouverture de la pluralité de chambres d'absorption et que la couche d'isolation soit orientée vers le collecteur de courant d'anode pour former un sous-ensemble anode-électrolyte solide ; et
    la disposition d'une cathode sur un second côté de l'électrolyte solide du sous-ensemble anode-électrolyte solide, pour préparer ainsi la batterie secondaire à électrolyte solide de l'une quelconque des revendications 10 à 12.

14. Procédé de la revendication 13, dans lequel la fourniture d'une pluralité de chambres d'absorption fournissant un espace pour stocker du lithium dans l'électrolyte solide est effectuée par perçage au laser, estampage, gravure, broyage chimique, découpage au laser, découpe au jet d'eau, nano-impression ou une combinaison de ceux-ci ; et/ou
dans lequel la couche intermédiaire comprend un matériau formant une couche intermédiaire possédant une conductivité ionique à 20 °C de $10^{-8}$ S/cm ou plus et une conductivité électronique à 25 °C de $4,0 \times 10^{-9}$ S/cm ou plus.

FIG. 1

# FIG. 2

# FIG. 3

# FIG. 4

# FIG. 5A

# FIG. 5B

# FIG. 5C

# FIG. 5D

# FIG. 6A

— 23a
— 21
— 23b

# FIG. 6B

# FIG. 6C

# FIG. 7A

100 um

# FIG. 7B

50 um

# FIG. 8

# FIG. 9A

# FIG. 9B

SE

CA

NMC

FIG. 9C

FIG. 9D

FIG. 10

**EP 4 343 882 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021089859 A
- US 2020303779 A1

- US 2021399336 A1

**Non-patent literature cited in the description**

- **J.-M. WINAND et al.** Measurement of Ionic Conductivity in Solid Electrolytes. *Europhysics Letters*, 1989, vol. 8 (5), 447-452

- **WOLFENSTINE, J.**; **ALLEN, J.L**; **SAKAMOTO, J et al.** Mechanical behavior of Li-ion-conducting crystalline oxide-based solid electrolytes: a brief review. *Ionics*, 2018, vol. 24, 1271-1276
- *Journal of The Electrochemical Society*, 2017, vol. 164 (13), A3333-A3341